# EUROPEAN PATENT APPLICATION

(11) **EP 4 623 691 A1**
(43) Date of publication of application: **01.10.2025**
(21) Application number: 23893522.5
(22) Date of filing: 26.10.2023
(51) Int. Cl.: A01N 43/30, C07D 317/46

(54) **INSECTICIDAL PREPARATION CONTAINING META-DIAMIDE COMPOUND AND USE THEREOF**

(30) Priority: 25.11.2022 CN 202211491715
(71) Applicant: Shenyang Sinochem Agrochemicals R & D Co., Ltd., Shenyang, Liaoning 110021 (CN); Jiangsu Yangnong Chemical Co., Ltd., Yangzhou, Jiangsu 225009 (CN)
(72) Inventor: CHOU, Jingyu, Shenyang, Liaoning 110021 (CN); ZHANG, Guosheng, Shenyang, Liaoning 110021 (CN); DONG, Guangxin, Shenyang, Liaoning 110021 (CN); CHANG, Xiuhui, Shenyang, Liaoning 110021 (CN); YU, Lu, Shenyang, Liaoning 110021 (CN); XU, Jingbo, Shenyang, Liaoning 110021 (CN)
(74) Representative: ZHAOffice SPRL
(86) International application number: PCT/CN2023/126626
(87) International publication number: WO 2024/109431

(57) **Abstract**

The present invention belongs to the technical field of agricultural insecticides, and relates to an insecticidal preparation containing an m-diamide compound (of general formula **I)** and use thereof. The preparation includes an active ingredient, at least one carrier and at least one auxiliary agent, and is characterized in that the preparation is a suspension, a dispersible oil suspension, a dispersible liquid, wettable powder, a water dispersible granule, or a dry suspension, wherein the active ingredient in the preparation is the compound of general formula I and has a weight percentage content of 1-99% in the preparation. The insecticidal composition of the present invention has the characteristics of good wetting, spreading and penetration of a pesticide liquid on a target, less rebound of the pesticide liquid on the target, a large liquid holding amount, a large deposition amount, less evaporation, a large absorption rate, high biological activity, safety to crops and the like, and is an ideal insecticide variety for preventing and controlling Lepidoptera, Coleoptera, Thysanoptera and other pests currently.

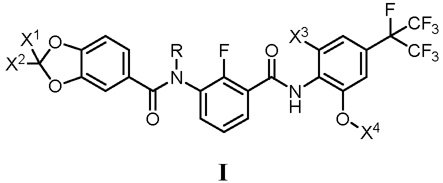

## Description

### FIELD OF TECHNOLOGY

The present invention belongs to the technical field of agricultural insecticides, and relates to an insecticidal preparation containing an m-diamide compound (of general formula I) and use thereof.

### BACKGROUND

As is well-known, insecticides play an extremely important role in preventing and controlling agriculture and forestry or urban sanitary pests. An m-diamide compound (of general formula I) disclosed in a Chinese patent (patent No.: CN 112457288 B) is a creative insecticide independently researched and developed by Shenyang Sinochem Agrochemicals R&D Co., Ltd., which has a novel chemical structure and a unique action mechanism, has stomach toxicity, contact toxicity, systemic action and other effects, has excellent activity against Lepidoptera, Coleoptera, Hemiptera, Diptera, Hymenoptera, Thysanoptera and other pests, and is an efficient insecticide with a broad market application prospect. However, it is only generally referred in the specification of the patent that the m-diamide compound (of general formula I) is used as an insecticide in the field of agriculture, forestry or sanitation, which is used by first dissolving the compound with an organic solvent (e.g., acetone) and then diluting the same into a solution at a desired concentration with a 0.1% Tween 80 aqueous solution to serve as a spray solution.

Pesticides themselves are a class of special chemicals with biological activity. To endow active ingredients with optimal efficacy, it is necessary to select an auxiliary agent system matched with effective ingredients. Although having no biological activity, auxiliary agents themselves can assist raw pesticides in being quickly, evenly and stably dispersed in spray carriers to ensure the distribution and adhesion of pesticide liquids on surfaces of organisms (plant leaf surfaces and pest body surfaces), promote the absorption of pesticide agents by the organisms and even increase the transmission of the pesticide agents in the organisms, to achieve the purposes of increasing retention amounts of the pesticides on plant surfaces, prolonging the retention time and improving the ability to penetrate plant epidermis, thereby improving the biological activity of the pesticides, decreasing use doses and reducing the harm of the pesticides to the human body and the pollution to the environment. Although the m-diamide insecticide (of general formula I) can be used by first dissolving the compound with the organic solvent (such as acetone) (the content of acetone in a total solution is not greater than 10%) and then formulating the solution at the required concentration with the 0.1% Tween 80 aqueous solution to serve as the spray solution, great drawbacks are caused. On the one hand, immediate formulation for immediate use is quite troublesome during use, and the organic solvent with a large use amount has a great impact on the environment and a high cost. On the other hand, the formulated solution needs to be used immediately, which is prone to precipitation of the effective ingredients after being placed for a long time and thus cannot be used next time.

The quality of pesticide formulations and preparations is a key factor determining effects and values of pesticide products. Different active components of the pesticides have greatly different physical and chemical properties and action targets. To endow the active ingredients with optimal efficacy, on the one hand, chemical structures, physical and chemical properties, biological activity and environmental impacts of the active components need to be considered, and on the other hand, comprehensive factors, such as use purposes, control targets, use modes and use conditions, also need to be considered. During preparation of the formulations, an appropriate auxiliary agent system needs to be matched according to different raw pesticides and different formulations, thereby improving the efficacy of the pesticides through the interaction between the auxiliary agent system and the raw pesticides. Therefore, it is extremely important to select the auxiliary agent system and an addition dose that match with the effective ingredients. Meanwhile, the corresponding preparations are formulated for use according to demands, such as solid preparations or liquid preparations. Different preparation products have different advantages to meet different crops and pesticide use habits of farmers. However, the purposes are to improve the biological activity of the pesticides to decrease the pesticide use amount and reduce the cost, and to kill a target at the minimum pesticide use amount to improve the compatibility with the environment. Currently, reports on research of m-diamide compound (of general formula I) preparations have not been found yet.

### SUMMARY

The purpose of the present invention is to provide an insecticidal preparation containing an m-diamide compound (of general formula **I)** and use thereof.

To achieve the purpose of the present invention, technical solutions of the present invention are as follows:
an insecticidal preparation containing an m-diamide compound is provided, the preparation includes an active ingredient, at least one carrier and at least one auxiliary agent, and the preparation is a suspension, a dispersible oil suspension, a dispersible liquid, wettable powder, a water dispersible granule, or a dry suspension, wherein the active ingredient in the preparation is the compound of general formula **I** and has a weight percentage content of 1-99% in the preparation; 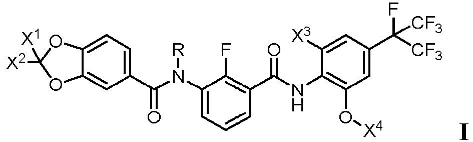
wherein:
   X¹ and X³ are selected from halogen;
   X² is selected from H or halogen;
   X⁴ is selected from halogenated C₁-C₃ alkyl; and
   R is selected from H, C₁-C₆ alkyl, or halogenated C₁-C₆ alkyl.

The suspension includes, in percentage by weight, 5-75% of an active ingredient 5-15% of a wetting dispersant, 4-10% of an antifreezing agent, 0-10% of other additives, and the balance of a liquid carrier, wherein the other additives are one or more of a defoamer, a preservative, a stabilizer, a penetrating agent, and a thickener; and specifically, the raw pesticide compound of general formula **I,** the surfactant, the antifreezing agent, water and the like are mixed and subjected to sanding to obtain a stable non-sedimentary flowable sample.

The dispersible oil suspension includes, in percentage by weight, 2-60% of the active ingredient, 5-30% of a surfactant, and the balance of an oil-based carrier; and specifically, the raw pesticide compound of general formula **I,** the surfactant and the oil-based carrier are added into a sanding machine for sanding until a particle size is qualified.

The dispersible liquid includes, in percentage by weight, 1-30% of the active ingredient, 4-20% of a surfactant, 2-30% of an organic solvent, and the balance of an oil-based carrier; and the raw pesticide compound of general formula **I,** the surfactant, the organic solvent and the oil-based carrier are mixed evenly to form an oil phase.

The wettable powder includes, in percentage by weight, 10-85% of the active ingredient, 3-20% of a dispersant, and the balance of a solid inert carrier; and the raw pesticide compound of general formula **I,** the surfactant and the carrier are mixed and subjected to pulverization to obtain the wettable powder.

The water dispersible granule includes, in percentage by weight, 0.5-75% of the active ingredient, 5-30% of a surfactant, and the balance of an inert carrier; and the raw pesticide compound of general formula **I,** the surfactant and the carrier are mixed and subjected to pulverization, kneading and granulation. Usually, particles with an international standard sieve mesh of 10-100 (1.676-0.152 mm) are prepared, which can be prepared by an extrusion, impregnation or spray granulation method.

The dry suspension includes, in percentage by weight, 3-85% of the active ingredient, 5-20% of a surfactant, and the balance of an inert carrier. The raw pesticide compound of general formula **I,** the surfactant and the carrier are mixed and subjected to sanding to obtain a pesticide suspension slurry, and a material is subjected to spraying, drying and granulation to prepare the dry suspension agent. A diameter of pellets is usually 50-200 µm.

The wetting dispersant in the suspension is a dispersant SK-20TX, a dispersant SD811, a dispersant SK-25CH, a dispersant SK-24R, a dispersant SK-33SC, a dispersant SP-SC3, a dispersant SP-SC29, a dispersant SP-27001, a dispersant SP-2750, a dispersant SP-28F, a dispersant SP-2728, a wetting agent SP-3266E, a wetting agent Tensiofix D33, a dispersant Tensiofix AMS303, a dispersant Atlox 4913, a dispersant TENSIOFIX SC, TENSIOFIX 96DB10, a dispersant TENSIOFIX DB08, a dispersant DURAMAX^{™} D-305, a dispersant DURAMAX^{™} D-205, a dispersant D425, a dispersant YUS-FS3000, a dispersant DA1349, a wetting agent Rhodasurf 860/P, a wetting dispersant SF133, a dispersant FS981, a dispersant NS-500LQ, a dispersant Emulson TRN14105, a dispersant ULTRASURF 7023A, a synergist TWEEN L-1010, a dispersant sodium methylnaphthalene sulfonate-formaldehyde condensate, a dispersant sodium alkylnaphthalene sulfonate polycondensate, an emulsifier 0201B, a polycarboxylate dispersant GY-D800, a polycarboxylate dispersant GY-D04, a polycarboxylate dispersant GY-D02, a wetting agent DURAMAX^{™} W600, a dispersant DURAMAX^{™} D800, a dispersant DURAMAX^{™} D865, a dispersant YUS-FS7PG, a dispersant YUS-FS1, a dispersant YUS-TXC, a wetting agent YUS-A51G, a dispersant SP-SC3060, a dispersant YUS-5050PB, a dispersant TANEMUL DA2883, a dispersant TANEMUL DA2880, a dispersant Greensperse BE02, or a dispersant SK-92FS1;
the antifreezing agent is ethylene glycol, 1,2-propanediol, or glycerol;
the liquid carrier is water; and
the other additives include, in percentage by weight, 0-2% of the defoamer, 0-1% of the preservative, 0-2% of the stabilizer, 0-5% of the penetrating agent, and 0-3% of the thickener.

The defoamer is SAG1522, SAG1572, AG-2501, AG2905, AGT735, or AGT530;
the preservative is Casson, EQ, DA20, GSL, or sodium benzoate;
the stabilizer is white carbon black, bentonite, or TENSIOFIX 869;
the penetrating agent is anhydrous fast T-80B or anhydrous fast T-80J; and
the thickener is magnesium aluminum silicate, xanthan gum, PVP K30, polyethylene glycol, or polyvinylpyrrolidone.

The surfactant in the dispersible oil suspension is a wetting agent DURAMAX^{™} W600, a dispersant Greenmul EF46, a dispersant Greenmul EF68, an emulsifier 500, an emulsifier 0201B, an emulsifier 1601, an emulsifier S80, a dispersant DURAMAX^{™} D800, a dispersant TENSIOFIX 96DB10, a dispersant TENSIOFIX B9718, a thickener TENSIOFIX 869, an emulsifier YUS-135B, an emulsifier AEO-3, a dispersant DURAMAX^{™} D865, a dispersant DURAMAX^{™} D-305, an emulsifier SK-5935, a dispersant SK-94S7, a dispersant ULTRASURF OD21, a dispersant ULTRASURF OD23, a dispersant YUS-OD1200, a dispersant SP-OF3472, a dispersant SP-OF3468, white carbon black, a dispersant YUS-CH1100, a dispersant YUS-D935, a dispersant Atlox 4912, a dispersant Atlox 4914, or a dispersant GR7M; and the oil-based carrier is methylated soybean oil, methyl oleate, tributyl phosphate, methyl palmitioleate, or methyl cocoate.

The surfactant in the dispersible liquid is an emulsifier YUS-135B, an emulsifier YUS-A51G, a dispersant SK-92FS1, an emulsifier SK-5935, an emulsifier 500, an emulsifier 0201B, an emulsifier 1601, a dispersant DURAMAX^{™} D800, an emulsifier SK-50EC, an emulsifier SK-51EC, an emulsifier SK-5208T, an emulsifier SK-5215T, an emulsifier YUS-D625, an emulsifier YUS-135B, an emulsifier YUS-EC2200, a wetting agent DURAMAX^{™} W600, or a dispersant YUS-D3020; the organic solvent is Rhodiasolv Green 25, Armid FMPC, Armid DM10, Rhodiasolv Green SV-92, Rhodiasolv Green SV-33, solvent oil S-150, or solvent oil S-200; and the oil-based carrier is methyl oleate, methyl cocoate, methyl palmitioleate, or tributyl phosphate.

The dispersant in the wettable powder is a dispersant Supragil MNS/90, sodium dodecyl sulfate, a dispersant SD819, a dispersant SK-20TX, a dispersant SK-24R, a polycarboxylate dispersant GY-D02, a polycarboxylate dispersant GY-D04, a wetting agent YUS-SXC, a wetting agent YUS-LXC, a dispersant TANEMUL DA2880, a dispersant TANEMUL DA2883, a wetting agent TENSIOFIX BCZ, a dispersant YUS-FS7PG, a dispersant SP-2836, a dispersant sodium alkylnaphthalene sulfonate polycondensate, a dispersant sodium methylene naphthalene sulfonate, a dispersant YUS-WP1, a dispersant YUS-WP2, or a dispersant YUS-FS1; and the solid inert carrier is white carbon black, bentonite, diatomite, attapulgite, light calcium carbonate, or clay.

The surfactant in the water dispersible granule is a wetting agent TENSIOFIX BCZ, a wetting agent sodium dodecyl sulfate, a dispersant PICO-SF3, a dispersant YUS-WG4, a dispersant YUS-WG5, a dispersant sodium alkylnaphthalene sulfonate polycondensate, a dispersant sodium methylnaphthalene sulfonate-formaldehyde condensate, soluble starch, sodium sulfate, a wetting agent Morwet EFW, a dispersant SK-24, a dispersant SK-20TX, a polycarboxylate dispersant GY-D04, a dispersant YUS-FS7PG, a dispersant Supragil MNS/90, a dispersant SD816, a dispersant YUS-SXC, a dispersant YUS-LXC, a dispersant SP2836, or a dispersant TANEMUL DA2880; and the inert carrier is bentonite, diatomite, white carbon black, light calcium carbonate, kaolin, or attapulgite.

The surfactant in the dry suspension is a wetting agent sodium dodecyl sulfate, a dispersant octylphenol polyoxyethylene ether sulfate, ammonium sulfate, SAG1522, a dispersant SP-DF2222, a dispersant SP-DF2296, a dispersant SD-610, a dispersant SK-24R, a dispersant Disperse 1700, a dispersant SP-2836, a dispersant sodium lignosulfonate, a dispersant sodium alkylnaphthalenesulfonate-formaldehyde condensate, a dispersant sodium α-olefin sulfonate, a dispersant YUS-WG5, a dispersant Morwet D450, a wetting agent Rhodasurf 860/p, a dispersant DURAMAX^{™} D-205, a dispersant DURAMAX^{™} D-305, a dispersant YUS-TXC, or an emulsifier YUS-A51G; and the inert carrier is kaolin, bentonite, diatomite, or attapulgite.

Preferably, the compound is of general formula **I:**
X¹ is selected from F;
X² is selected from H or F;
X³ is selected from Cl, Br, or I;
X⁴ is selected from -CF₃ or -CHF₂; and
R is selected from H or C₁-C₆ alkyl.

Further preferably, the compound is of general formula **I:**
X¹ and X² are selected from F;
X³ is selected from Br;
X⁴ is selected from -CHF₂; and
R is selected from H or C₁-C₆ alkyl.

Furthermore preferably, the compound is of general formula **I:**
X¹ and X² are selected from F;
X³ is selected from Br;
X⁴ is selected from -CHF₂; and
R is selected from H, methyl, ethyl, or n-propyl.

The insecticidal preparation of the present invention can be diluted or sprayed with water directly by a user before use, and can also be used directly.

The technical solutions of the present invention also include a method for preventing and controlling pests: applying the insecticide preparation of the present invention to the pests or a growth medium of the pests. A more suitable dose of an effective ingredient usually selected is 10 grams to 1,000 grams per hectare.

The technical solutions of the present invention also include use of the above insecticidal preparation. The insecticidal preparation of the present invention can be applied to prevention and control of sanitary pests for agriculture, forestry or non-therapeutic purposes, has an excellent prevention and control effect on Lepidoptera, Coleoptera, Yhysanoptera and other pests, and is safe to crops.

The present invention has the following advantages.

In the present invention, according to the particularity of the biological activity of a pesticide itself, the guidance of theoretical knowledge and the combination of comprehensive factors such as a use purpose, a prevention and control target, a use mode and use conditions, an auxiliary agent system and an addition dose that are suitable for an effective component are selected by studying a structural active group and an action mode of an active component, thereby improving the refinement level of the preparation. A specific system is as follows: according to the preparation formulated by adopting the auxiliary agent system of the present invention, on the one hand, the auxiliary agent can well anchor the active component to prevent aggregation of particles of the active component due to a steric hindrance effect and an electrostatic repulsion effect, so that the preparation system achieves good physical stability and can assist the active component to be quickly, evenly and stably dispersed in the spray carrier, the active component has a small particle size and narrow distribution, and a pesticide liquid has moderate viscosity and appropriate dynamic surface tension, thereby ensuring the distribution and adhesion of the pesticide liquid on a surface of an organism (plant leaf surface), promoting the absorption of a pesticide agent by the organism and even increasing the transport of the pesticide agent in the organism to reduce the loss of the pesticide liquid, so as to achieve the purposes of increasing the retention amount of a pesticide on a plant surface, prolonging the retention time and improving the ability to penetrate plant epidermis. On the other hand, by controlling the range of contact angle, spreading and wetting abilities are improved to make the pesticide liquid directly enter the plant body from pores of a plant and then absorbed, thereby ensuring the penetration and absorption of the pesticide liquid and fully improving the efficacy of the active ingredient of the insecticide obtained in the present invention, which can not only improve the control efficiency of the effective ingredient of the pesticide to enhance the safety to crops, and decrease the use dose to reduce the cost and kill a target to the maximum extent at the minimum pesticide use amount, but also improve the compatibility with the environment to reduce the harm of the pesticide to the human body and the pollution to the environment. The preparation is convenient to use, friendly to the environment, and convenient to produce, transport and store. The insecticide composition of the present invention has a broad market prospect and good economic benefits, social benefits and ecological benefits.

### DESCRIPTION OF THE EMBODIMENTS

The following specific embodiments are used to further elaborate the present invention, but the present invention is definitely not limited to these examples, and methods well known to those in the art shall be included within the scope of the present invention.

Percentages and parts of all preparations are calculated by weight in proportioning. The active component (of general formula **I)** is prepared and obtained by referring to relevant records (CN 112457288 B).

The compound of general formula **I** is specifically as follows: compound A1 (X¹ and X² are selected from F; X³ is selected from Br; X⁴ is selected from -CHF₂; and R is selected from H); compound A2 (X¹ and X² are selected from F; X³ is selected from Br; X⁴ is selected from -CHF₂; and R is selected from methyl); compound A3 (X¹ and X² are selected from F; X³ is selected from Br; X⁴ is selected from -CHF₂; and R is selected from ethyl); compound A4 (X¹ and X² are selected from F; X³ is selected from Br; X⁴ is selected from -CHF₂; and R is selected from n-propyl). All other raw materials are commercially available products.

### Preparation formula examples

### Example 1. Formulation of a suspension containing 5% of the compound A1

According to formula requirements, 5% of the compound A1, 2% of a dispersant SK-20TX, 5% of a dispersant SD811, 4% of a dispersant SK-25CH, 1% of white carbon black, 1% of magnesium aluminum silicate, 0.2% of xanthan gum, 0.3% of a preservative EQ, 0.6% of a defoamer SAG1522, 5% of ethylene glycol and water supplemented to 100% were separately and sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a suspension containing 5% of the compound A1. Physical property index determination results at normal temperature are as follows: an active component content is 5.05%; a dynamic surface tension is 35.58 dyn/cm (pesticide liquid concentration: 133 ppm); a pesticide liquid holding amount is 29.8 mg/cm²; a particle size (D50/97, µm) is 0.71/1.91; a suspension rate is 100%; and a contact angle is 26.9°. Under heat storage (54±2°C/14 d), the active component content is 5.03%; the dynamic surface tension is 36.6 dyn/cm (pesticide liquid concentration: 133 ppm); the pesticide liquid holding amount is 29.3 mg/cm², the particle size (D50/97, µm) is 0.73/1.99; the suspension rate is 100%; and the contact angle is 27.2°.

The compound A1 can also be replaced with one of the compound A2, the compound A3 and the compound A4 of the m-diamide insecticide (of general formula **I)** described in the specification to form new examples.

### Example 2. Formulation of a suspension containing 10% of the compound A1

According to formula requirements, 10% of the compound A1, 5% of a dispersant SP-SC3, 5% of a wetting agent Tensiofix D33, 5% of a dispersant SD811, 0.8% of white carbon black, 0.8% of magnesium aluminum silicate, 0.15% of xanthan gum, 0.2% of a preservative EQ, 0.6% of a defoamer SAG1522, 5% of ethylene glycol and water supplemented to 100% were separately and sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a suspension containing 10% of the compound A1. Physical property index determination results at normal temperature are as follows: an active component content is 10.12%; a dynamic surface tension is 34.99 dyn/cm (pesticide liquid concentration: 133 ppm); a pesticide liquid holding amount is 29.1 mg/cm²; a particle size (D50/97, µm) is 0.69/1.97; a suspension rate is 100%; and a contact angle is 25.3°. Under heat storage (54±2°C/14 d), the active component content is 10.07%; the dynamic surface tension is 35.75 dyn/cm (pesticide liquid concentration: 133 ppm); the pesticide liquid holding amount is 28.6 mg/cm², the particle size (D50/97, µm) is 0.72/2.09; the suspension rate is 100%; and the contact angle is 25.8°.

The compound A1 can also be replaced with one of the compound A2, the compound A3 and the compound A4 of the m-diamide insecticide (of general formula **I)** described in the specification to form new examples.

### Example 3. Formulation of a suspension containing 10% of the compound A1

According to formula requirements, 10% of the compound A1, 3% of a dispersant Atlox 4913, 5% of a dispersant SP-2750, 3% of a dispersant TENSIOFIX DB08, 0.8% of white carbon black, 0.8% of magnesium aluminum silicate, 0.15% of xanthan gum, 0.2% of a preservative Casson, 0.6% of a defoamer SAG1522, 5% of 1,2-propanediol and water supplemented to 100% were separately and sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a suspension containing 10% of the compound A1. Physical property index determination results at normal temperature are as follows: an active component content is 10.21%; a dynamic surface tension is 34.58 dyn/cm (pesticide liquid concentration: 133 ppm); a pesticide liquid holding amount is 30.1 mg/cm²; a particle size (D50/97, µm) is 0.82/2.11; a suspension rate is 100%; and a contact angle is 23.8°. Under heat storage (54±2°C/14 d), the active component content is 10.11%; the dynamic surface tension is 35.86 dyn/cm (pesticide liquid concentration: 133 ppm); the pesticide liquid holding amount is 29.5 mg/cm², the particle size (D50/97, µm) is 0.86/2.31; the suspension rate is 100%; and the contact angle is 24.5°.

The compound A1 can also be replaced with one of the compound A2, the compound A3 and the compound A4 of the m-diamide insecticide (of general formula I) described in the specification to form new examples.

### Example 4. Formulation of a suspension containing 10% of the compound A1

According to formula requirements, 10% of the compound A1, 3% of a dispersant DURAMAX^{™} D-205, 3% of a dispersant SK-20TX, 5% of a wetting agent Tensiofix D33, 5% of a penetrating agent anhydrous fast T-80B, 0.8% of white carbon black, 0.8% of magnesium aluminum silicate, 0.15% of xanthan gum, 0.2% of a preservative Casson, 0.6% of a defoamer SAG1522, 5% of 1,2-propanediol and water supplemented to 100% were separately and sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a suspension containing 10% of the compound A1. Physical property index determination results at normal temperature are as follows: an active component content is 10.19%; a dynamic surface tension is 36.10 dyn/cm (pesticide liquid concentration: 133 ppm); a pesticide liquid holding amount is 29.8 mg/cm²; a particle size (D50/97, µm) is 0.92/2.31; a suspension rate is 100%; and a contact angle is 24.6°. Under heat storage (54±2°C/14 d), the active component content is 10.05%; the dynamic surface tension is 36.82 dyn/cm (pesticide liquid concentration: 133 ppm); the pesticide liquid holding amount is 29.1 mg/cm², the particle size (D50/97, µm) is 1.01/2.52; the suspension rate is 100%; and the contact angle is 25.2°.

The compound A1 can also be replaced with one of the compound A2, the compound A3 and the compound A4 of the m-diamide insecticide (of general formula I) described in the specification to form new examples.

### Example 5. Formulation of a suspension containing 10% of the compound A1

According to formula requirements, 10% of the compound A1, 4% of a dispersant D425, 3% of a dispersant SK-20TX, 5% of a dispersant YUS-FS3000, 0.5% of a thickener PVP K30, 0.8% of white carbon black, 0.8% of magnesium aluminum silicate, 0.15% of xanthan gum, 0.2% of a preservative Casson, 0.6% of a defoamer SAG1522, 5% of ethylene glycol and water supplemented to 100% were separately and sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a suspension containing 10% of the compound A1. Physical property index determination results at normal temperature are as follows: an active component content is 10.08%; a dynamic surface tension is 37.32 dyn/cm (pesticide liquid concentration: 133 ppm); a pesticide liquid holding amount is 29.2 mg/cm²; a particle size (D50/97, µm) is 0.95/2.39; a suspension rate is 100%; and a contact angle is 23.6°. Under heat storage (54±2°C/14 d), the active component content is 9.98%; the dynamic surface tension is 38.15 dyn/cm (pesticide liquid concentration: 133 ppm); the pesticide liquid holding amount is 28.6 mg/cm², the particle size (D50/97, µm) is 1.08/2.65; the suspension rate is 100%; and the contact angle is 24.3°.

The compound A1 can also be replaced with one of the compound A2, the compound A3 and the compound A4 of the m-diamide insecticide (of general formula **I)** described in the specification to form new examples.

### Example 6. Formulation of a suspension containing 10% of the compound A1

According to formula requirements, 10% of the compound A1, 3% of a dispersant DA1349, 4% of a wetting agent Rhodasurf 860/P, 6% of a wetting dispersant SF133, 4% of a dispersant SK-33SC, 0.8% of white carbon black, 0.8% of magnesium aluminum silicate, 0.15% of xanthan gum, 0.2% of a preservative EQ, 0.8% of a defoamer SAG1522, 5% of 1,2-propanediol and water supplemented to 100% were separately and sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a suspension containing 10% of the compound A1. Physical property index determination results at normal temperature are as follows: an active component content is 10.28%; a dynamic surface tension is 35.76 dyn/cm (pesticide liquid concentration: 133 ppm); a pesticide liquid holding amount is 29.3 mg/cm²; a particle size (D50/97, µm) is 0.79/2.01; a suspension rate is 100%; and a contact angle is 25.3°. Under heat storage (54±2°C/14 d), the active component content is 10.01%; the dynamic surface tension is 36.21 dyn/cm (pesticide liquid concentration: 133 ppm); the pesticide liquid holding amount is 28.9 mg/cm², the particle size (D50/97, µm) is 0.99/2.33; the suspension rate is 100%; and the contact angle is 25.9°.

The compound A1 can also be replaced with one of the compound A2, the compound A3 and the compound A4 of the m-diamide insecticide (of general formula **I)** described in the specification to form new examples.

### Example 7. Formulation of a suspension containing 15% of the compound A1

According to formula requirements, 15% of the compound A1, 3% of a dispersant DURAMAX^{™} D-305, 3% of a dispersant SK-24R, 3% of a dispersant SP-27001, 5% of a dispersant TENSIOFIX DB08, 0.8% of white carbon black, 0.8% of magnesium aluminum silicate, 0.1% of xanthan gum, 0.2% of a preservative EQ, 0.8% of a defoamer SAG1522, 5% of 1,2-propanediol and water supplemented to 100% were separately and sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a suspension containing 15% of the compound A1. Physical property index determination results at normal temperature are as follows: an active component content is 15.22%; a dynamic surface tension is 36.51 dyn/cm (pesticide liquid concentration: 133 ppm); a pesticide liquid holding amount is 29.5 mg/cm²; a particle size (D50/97, µm) is 0.82/2.12; a suspension rate is 100%; and a contact angle is 28.1°. Under heat storage (54±2°C/14 d), the active component content is 15.02%; the dynamic surface tension is 36.91 dyn/cm (pesticide liquid concentration: 133 ppm); the pesticide liquid holding amount is 29.1 mg/cm², the particle size (D50/97, µm) is 0.96/2.32; the suspension rate is 100%; and the contact angle is 28.8°.

The compound A1 can also be replaced with one of the compound A2, the compound A3 and the compound A4 of the m-diamide insecticide (of general formula **I)** described in the specification to form new examples.

### Example 8. Formulation of a suspension containing 15% of the compound A1

According to formula requirements, 15% of the compound A1, 5% of a dispersant FS981, 5% of a dispersant SP-SC3, 5% of a penetrating agent anhydrous fast T-80J, 0.6% of white carbon black, 0.6% of magnesium aluminum silicate, 0.5% of xanthan gum, 0.2% of a preservative Casson, 0.6% of a defoamer SAG1522, 5% of 1,2-propanediol and water supplemented to 100% were separately and sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a suspension containing 15% of the compound A1. Physical property index determination results at normal temperature are as follows: an active component content is 15.28%; a dynamic surface tension is 36.62 dyn/cm (pesticide liquid concentration: 133 ppm); a pesticide liquid holding amount is 28.5 mg/cm²; a particle size (D50/97, µm) is 0.89/2.51; a suspension rate is 100%; and a contact angle is 23.1°. Under heat storage (54±2°C/14 d), the active component content is 15.03%; the dynamic surface tension is 37.12 dyn/cm (pesticide liquid concentration: 133 ppm); the pesticide liquid holding amount is 28.1 mg/cm², the particle size (D50/97, µm) is 0.99/2.63; the suspension rate is 100%; and the contact angle is 23.6°.

The compound A1 can also be replaced with one of the compound A2, the compound A3 and the compound A4 of the m-diamide insecticide (of general formula **I)** described in the specification to form new examples.

### Example 9. Formulation of a suspension containing 20% of the compound A1

According to formula requirements, 20% of the compound A1, 2% of a dispersant NS-500LQ, 5% of a dispersant SP-28F, 5% of a wetting agent SP-3266E, 3% of a dispersant YUS-FS3000, 0.6% of white carbon black, 0.6% of magnesium aluminum silicate, 0.08% of xanthan gum, 0.2% of a preservative EQ, 0.6% of a defoamer SAG1522, 5% of ethylene glycol and water supplemented to 100% were separately and sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a suspension containing 20% of the compound A1. Physical property index determination results at normal temperature are as follows: an active component content is 20.25%; a dynamic surface tension is 37.25 dyn/cm (pesticide liquid concentration: 133 ppm); a pesticide liquid holding amount is 28.8 mg/cm²; a particle size (D50/97, µm) is 0.99/2.63; a suspension rate is 100%; and a contact angle is 25.1°. Under heat storage (54±2°C/14 d), the active component content is 20.01%; the dynamic surface tension is 37.93 dyn/cm (pesticide liquid concentration: 133 ppm); the pesticide liquid holding amount is 28.3 mg/cm², the particle size (D50/97, µm) is 1.09/2.78; the suspension rate is 100%; and the contact angle is 25.8°.

The compound A1 can also be replaced with one of the compound A2, the compound A3 and the compound A4 of the m-diamide insecticide (of general formula **I)** described in the specification to form new examples.

### Example 10. Formulation of a suspension containing 30% of the compound A1

According to formula requirements, 30% of the compound A1, 3% of a dispersant Emulson TRN14105, 3% of a dispersant SK-20TX, 5% of a dispersant ULTRASURF 7023A, 3% of a dispersant TENSIOFIX DB08, 0.6% of white carbon black, 0.6% of magnesium aluminum silicate, 0.06% of xanthan gum, 0.2% of a preservative Casson, 0.6% of a defoamer SAG1522, 5% of ethylene glycol and water supplemented to 100% were separately and sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a suspension containing 30% of the compound A1. Physical property index determination results at normal temperature are as follows: an active component content is 30.23%; a dynamic surface tension is 38.22 dyn/cm (pesticide liquid concentration: 133 ppm); a pesticide liquid holding amount is 27.8 mg/cm²; a particle size (D50/97, µm) is 1.06/2.75; a suspension rate is 100%; and a contact angle is 22.9°. Under heat storage (54±2°C/14 d), the active component content is 30.01%; the dynamic surface tension is 38.93 dyn/cm (pesticide liquid concentration: 133 ppm); the pesticide liquid holding amount is 27.1 mg/cm², the particle size (D50/97, µm) is 1.12/2.89; the suspension rate is 100%; and the contact angle is 23.6°.

The compound A1 can also be replaced with one of the compound A2, the compound A3 and the compound A4 of the m-diamide insecticide (of general formula **I)** described in the specification to form new examples.

### Example 11. Formulation of a suspension containing 40% of the compound A1

According to formula requirements, 40% of the compound A1, 3% of a dispersant SK-24R, 5% of a dispersant SP-SC29, 3% of a dispersant Tensiofix AMS303, 5% of a synergist TWEEN L-1010, 0.5% of white carbon black, 0.5% of magnesium aluminum silicate, 0.05% of xanthan gum, 0.2% of a preservative Casson, 0.6% of a defoamer SAG1522, 5% of 1,2-propanediol and water supplemented to 100% were separately and sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a suspension containing 40% of the compound A1. Physical property index determination results at normal temperature are as follows: an active component content is 40.33%; a dynamic surface tension is 37.91 dyn/cm (pesticide liquid concentration: 133 ppm); a pesticide liquid holding amount is 28.7 mg/cm²; a particle size (D50/97, µm) is 1.11/2.86; a suspension rate is 100%; and a contact angle is 21.9°. Under heat storage (54±2°C/14 d), the active component content is 40.12%; the dynamic surface tension is 38.3 dyn/cm (pesticide liquid concentration: 133 ppm); the pesticide liquid holding amount is 27.9 mg/cm², the particle size (D50/97, µm) is 1.21/3.01; the suspension rate is 100%; and the contact angle is 22.6°.

The compound A1 can also be replaced with one of the compound A2, the compound A3 and the compound A4 of the m-diamide insecticide (of general formula **I)** described in the specification to form new examples.

### Example 12. Formulation of a suspension containing 50% of the compound A1

According to formula requirements, 50% of the compound A1, 3% of a dispersant Atlox 4913, 5% of a dispersant SP-2750, 3% of a dispersant TENSIOFIX DB08, 0.5% of white carbon black, 0.5% of magnesium aluminum silicate, 0.05% of xanthan gum, 0.2% of a preservative Casson, 0.6% of a defoamer SAG1522, 5% of ethylene glycol and water supplemented to 100% were separately and sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a suspension containing 50% of the compound A1. Physical property index determination results at normal temperature are as follows: an active component content is 50.31%; a dynamic surface tension is 39.81 dyn/cm (pesticide liquid concentration: 133 ppm); a pesticide liquid holding amount is 27.2 mg/cm²; a particle size (D50/97, µm) is 1.16/3.28; a suspension rate is 100%; and a contact angle is 24.6°. Under heat storage (54±2°C/14 d), the active component content is 50.06%; the dynamic surface tension is 40.11 dyn/cm (pesticide liquid concentration: 133 ppm); the pesticide liquid holding amount is 26.8 mg/cm², the particle size (D50/97, µm) is 1.29/3.53; the suspension rate is 100%; and the contact angle is 25.3°.

The compound A1 can also be replaced with one of the compound A2, the compound A3 and the compound A4 of the m-diamide insecticide (of general formula **I)** described in the specification to form new examples.

### Example 13. Formulation of a dispersible oil suspension containing 10% of the compound A1

According to formula requirements, 10% of the compound A1, 2% of a wetting agent DURAMAX^{™} W600, 12% of a dispersant Greenmul EF46, 2% of an emulsifier 500, 1% of a thickener TENSIOFIX 869 and methylated soybean oil supplemented to 100% were separately and sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a dispersible oil suspension containing 10% of the compound A1. Physical property index determination results at normal temperature are as follows: an active component content is 10.35%; a dynamic surface tension is 37.12 dyn/cm (pesticide liquid concentration: 133 ppm); a pesticide liquid holding amount is 28.59 mg/cm²; a particle size (D50/97, µm) is 0.91/2.68; a suspension rate is 100%; and a contact angle is 27.1°. Under heat storage (54±2°C/14 d), the active component content is 10.05%; the dynamic surface tension is 37.92 dyn/cm (pesticide liquid concentration: 133 ppm); the pesticide liquid holding amount is 27.63 mg/cm², the particle size (D50/97, µm) is 1.15/3.76; the suspension rate is 100%; and the contact angle is 27.9°.

The compound A1 can also be replaced with one of the compound A2, the compound A3 and the compound A4 of the m-diamide insecticide (of general formula **I)** described in the specification to form new examples.

### Example 14. Formulation of a dispersible oil suspension containing 10% of the compound A1

According to formula requirements, 10% of the compound A1, 3% of a dispersant DURAMAX^{™} D800, 3% of a dispersant TENSIOFIX 96DB10, 5% of an emulsifier YUS-135B, 5% of an emulsifier 0201B, 1% of white carbon black, 1% of a thickener TENSIOFIX 869 and methyl oleate supplemented to 100% were separately and sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a dispersible oil suspension containing 10% of the compound A1. Physical property index determination results at normal temperature are as follows: an active component content is 10.51%; a dynamic surface tension is 36.89 dyn/cm (pesticide liquid concentration: 133 ppm); a pesticide liquid holding amount is 28.88 mg/cm²; a particle size (D50/97, µm) is 0.89/2.36; a suspension rate is 100%; and a contact angle is 26.9°. Under heat storage (54±2°C/14 d), the active component content is 10.21%; the dynamic surface tension is 37.21 dyn/cm (pesticide liquid concentration: 133 ppm); the pesticide liquid holding amount is 27.98 mg/cm², the particle size (D50/97, µm) is 0.98/2.77; the suspension rate is 100%; and the contact angle is 27.5°.

The compound A1 can also be replaced with one of the compound A2, the compound A3 and the compound A4 of the m-diamide insecticide (of general formula **I)** described in the specification to form new examples.

### Example 15. Formulation of a dispersible oil suspension containing 20% of the compound A1

According to formula requirements, 20% of the compound A1, 3% of a dispersant DURAMAX^{™} D865, 3% of an emulsifier SK-5935, 5% of a dispersant TENSIOFIX B9718, 3% of an emulsifier YUS-135B, 1% of a thickener TENSIOFIX 869 and methylated soybean oil supplemented to 100% were separately and sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a dispersible oil suspension containing 20% of the compound A1. Physical property index determination results at normal temperature are as follows: an active component content is 20.36%; a dynamic surface tension is 37.31 dyn/cm (pesticide liquid concentration: 133 ppm); a pesticide liquid holding amount is 29.36 mg/cm²; a particle size (D50/97, µm) is 0.97/3.11; a suspension rate is 100%; and a contact angle is 26.2°. Under heat storage (54±2°C/14 d), the active component content is 20.12%; the dynamic surface tension is 37.89 dyn/cm (pesticide liquid concentration: 133 ppm); the pesticide liquid holding amount is 28.69 mg/cm², the particle size (D50/97, µm) is 1.12/3.55; the suspension rate is 100%; and the contact angle is 27.7°.

The compound A1 can also be replaced with one of the compound A2, the compound A3 and the compound A4 of the m-diamide insecticide (of general formula **I)** described in the specification to form new examples.

### Example 16. Formulation of a dispersible oil suspension containing 20% of the compound A1

According to formula requirements, 20% of the compound A1, 4% of a dispersant DURAMAX^{™} D-305, 3% of a dispersant ULTRASURF OD21, 5% of a dispersant YUS-OD1200, 2% of an emulsifier 1601, 1% of a thickener TENSIOFIX 869 and methyl oleate supplemented to 100% were separately and sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a dispersible oil suspension containing 20% of the compound A1. Physical property index determination results at normal temperature are as follows: an active component content is 20.38%; a dynamic surface tension is 36.68 dyn/cm (pesticide liquid concentration: 133 ppm); a pesticide liquid holding amount is 30.11 mg/cm²; a particle size (D50/97, µm) is 1.05/3.35; a suspension rate is 100%; and a contact angle is 25.9°. Under heat storage (54±2°C/14 d), the active component content is 20.15%; the dynamic surface tension is 37.02 dyn/cm (pesticide liquid concentration: 133 ppm); the pesticide liquid holding amount is 29.33 mg/cm², the particle size (D50/97, µm) is 1.37/3.98; the suspension rate is 100%; and the contact angle is 26.9°.

The compound A1 can also be replaced with one of the compound A2, the compound A3 and the compound A4 of the m-diamide insecticide (of general formula I) described in the specification to form new examples.

### Example 17. Formulation of a dispersible oil suspension containing 30% of the compound A1

According to formula requirements, 30% of the compound A1, 3% of a dispersant SK-94S7, 5% of a dispersant ULTRASURF OD23, 5% of an emulsifier YUS-135B, 2% of an emulsifier S80, 0.5% of a thickener TENSIOFIX 869 and methyl oleate supplemented to 100% were sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a dispersible oil suspension containing 30% of the compound A1. Physical property index determination results at normal temperature are as follows: an active component content is 30.51%; a dynamic surface tension is 38.69 dyn/cm (pesticide liquid concentration: 133 ppm); a pesticide liquid holding amount is 28.23 mg/cm²; a particle size (D50/97, µm) is 0.86/2.79; a suspension rate is 100%; and a contact angle is 25.5°. Under heat storage (54±2°C/14 d), the active component content is 30.25%; the dynamic surface tension is 39.01 dyn/cm (pesticide liquid concentration: 133 ppm); the pesticide liquid holding amount is 27.82 mg/cm², the particle size (D50/97, µm) is 1.19/3.59; the suspension rate is 100%; and the contact angle is 26.3°.

The compound A1 can also be replaced with one of the compound A2, the compound A3 and the compound A4 of the m-diamide insecticide (of general formula I) described in the specification to form new examples.

### Example 18. Formulation of a dispersible oil suspension containing 40% of the compound A1

According to formula requirements, 40% of the compound A1, 6% of a dispersant Greenmul EF68, 5% of a dispersant SP-OF3472, 5% of a dispersant SP-OF3468, 2% of an emulsifier 500, 1% of white carbon black and methyl oleate supplemented to 100% were sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a dispersible oil suspension containing 40% of the compound A1. Physical property index determination results at normal temperature are as follows: an active component content is 40.39%; a dynamic surface tension is 39.22 dyn/cm (pesticide liquid concentration: 133 ppm); a pesticide liquid holding amount is 27.59 mg/cm²; a particle size (D50/97, µm) is 1.11/3.68; a suspension rate is 100%; and a contact angle is 26.1°. Under heat storage (54±2°C/14 d), the active component content is 40.18%; the dynamic surface tension is 39.59 dyn/cm (pesticide liquid concentration: 133 ppm); the pesticide liquid holding amount is 26.59 mg/cm², the particle size (D50/97, µm) is 1.39/4.22; the suspension rate is 100%; and the contact angle is 26.8°.

The compound A1 can also be replaced with one of the compound A2, the compound A3 and the compound A4 of the m-diamide insecticide (of general formula **I)** described in the specification to form new examples.

### Example 19. Formulation of a dispersible liquid containing 10% of the compound A1

According to formula requirements, 10% of the compound A1 and 20% of a solvent Rhodiasolv Green 25 were separately added in percentage by weight into a mixing kettle and stirred for dissolution or heated for dissolution in a hot water bath when necessary, and then 5% of an emulsifier YUS-135B, 5% of an emulsifier SK-5935, 2% of an emulsifier 500, 4% of an emulsifier 0201B and methyl oleate supplemented to 100% were sequentially added and mixed evenly to obtain a dispersible liquid containing 10% of the compound A1. Physical property index determination results at normal temperature are as follows: an active component content is 10.39%; a dynamic surface tension is 35.63 dyn/cm (pesticide liquid concentration: 133 ppm); a pesticide liquid holding amount is 29.9 mg/cm²; a particle size (D50/97, µm) is 0.72/1.89; a suspension rate is 100%; and a contact angle is 25.2°. Under heat storage (54±2°C/14 d), the active component content is 10.05%; the dynamic surface tension is 36.18 dyn/cm (pesticide liquid concentration: 133 ppm); the pesticide liquid holding amount is 28.3 mg/cm², the particle size (D50/97, µm) is 0.81/1.93; the suspension rate is 100%; and the contact angle is 26.1°.

The compound A1 can also be replaced with one of the compound A2, the compound A3 and the compound A4 of the m-diamide insecticide (of general formula **I)** described in the specification to form new examples.

### Example 20. Formulation of a dispersible liquid containing 20% of the compound A1

According to formula requirements, 20% of the compound A1, 30% of a solvent Armid FMPC were separately added in percentage by weight into a mixing kettle and stirred for dissolution or heated for dissolution in a hot water bath when necessary, and then 3% of a dispersant DURAMAX^{™} D800, 5% of an emulsifier SK-50EC, 5% of an emulsifier SK-51EC, 3% of an emulsifier YUS-135B and methyl cocoate supplemented to 100% were sequentially added and mixed evenly to obtain a dispersible liquid containing 20% of the compound A1. Physical property index determination results at normal temperature are as follows: an active component content is 20.56%; a dynamic surface tension is 37.12 dyn/cm (pesticide liquid concentration: 133 ppm); a pesticide liquid holding amount is 28.9 mg/cm²; a particle size (D50/97, µm) is 0.69/1.92; a suspension rate is 100%; and a contact angle is 23.3°. Under heat storage (54±2°C/14 d), the active component content is 20.15%; the dynamic surface tension is 37.98 dyn/cm (pesticide liquid concentration: 133 ppm); the pesticide liquid holding amount is 27.7 mg/cm², the particle size (D50/97, µm) is 0.71/2.02; the suspension rate is 100%; and the contact angle is 24.1°.

The compound A1 can also be replaced with one of the compound A2, the compound A3 and the compound A4 of the m-diamide insecticide (of general formula I) described in the specification to form new examples.

### Example 21. Formulation of wettable powder containing 10% of the compound A1

According to formula requirements, 10% of the compound A1, 3% of a wetting agent sodium dodecyl sulfate, 3% of a dispersant Supragil MNS/90, 5% of a dispersant SD819, 4% of a dispersant SK-24R, 8% of white carbon black and bentonite supplemented to 100% were fully mixed in percentage by weight and then pulverized by an ultrafine pulverizer to obtain wettable powder containing 10% of the compound A1. Physical property index determination results at normal temperature are as follows: an active component content is 10.29%; a suspension rate is 97.2%; a wetting time is 22 s; a dynamic surface tension is 43.18 dyn/cm (pesticide liquid concentration: 133 ppm); a pesticide liquid holding amount is 27.9 mg/cm²; and a contact angle is 27.9°. Under heat storage (54±2°C/14 d), the active component content is 10.01%; the suspension rate is 95.8%; the wetting time is 25 s; the dynamic surface tension is 43.95 dyn/cm (pesticide liquid concentration: 133 ppm); the pesticide liquid holding amount is 27.3 mg/cm²; and the contact angle is 28.3°.

The compound A1 can also be replaced with one of the compound A2, the compound A3 and the compound A4 of the m-diamide insecticide (of general formula I) described in the specification to form new examples.

### Example 22. Formulation of wettable powder containing 20% of the compound A1

According to formula requirements, 20% of the compound A1, 3% of a wetting agent sodium dodecyl sulfate, 4% of a polycarboxylate dispersant GY-D04, 4% of a wetting agent YUS-SXC, 5% of a dispersant TANEMUL DA2880, 8% of white carbon black and diatomite supplemented to 100% were fully mixed in percentage by weight and then pulverized by an ultrafine pulverizer to obtain wettable powder containing 20% of the compound A1. Physical property index determination results at normal temperature are as follows: an active component content is 20.57%; a suspension rate is 95.8%; a wetting time is 25 s; a dynamic surface tension is 39.82 dyn/cm (pesticide liquid concentration: 133 ppm); a pesticide liquid holding amount is 28.5 mg/cm²; and a contact angle is 26.3°. Under heat storage (54±2°C/14 d), the active component content is 20.12%; the suspension rate is 93.9%; the wetting time is 28 s; the dynamic surface tension is 40.21 dyn/cm (pesticide liquid concentration: 133 ppm); the pesticide liquid holding amount is 27.8 mg/cm²; and the contact angle is 27.1°.

The compound A1 can also be replaced with one of the compound A2, the compound A3 and the compound A4 of the m-diamide insecticide (of general formula I) described in the specification to form new examples.

### Example 23. Formulation of wettable powder containing 40% of the compound A1

According to formula requirements, 40% of the compound A1, 3% of a wetting agent TENSIOFIX BCZ, 4% of a dispersant YUS-FS7PG, 6% of a dispersant TANEMUL DA2883, 6% of white carbon black and diatomite supplemented to 100% were fully mixed in percentage by weight and then pulverized by an ultrafine pulverizer to obtain wettable powder containing 40% of the compound A1. Physical property index determination results at normal temperature are as follows: an active component content is 40.53%; a suspension rate is 96.2%; a wetting time is 19 s; a dynamic surface tension is 40.62 dyn/cm (pesticide liquid concentration: 133 ppm); a pesticide liquid holding amount is 29.2 mg/cm²; and a contact angle is 26.9°. Under heat storage (54±2°C/14 d), the active component content is 40.01%; the suspension rate is 95.1%; the wetting time is 23 s; the dynamic surface tension is 41.31 dyn/cm (pesticide liquid concentration: 133 ppm); the pesticide liquid holding amount is 28.6 mg/cm²; and the contact angle is 27.7°.

The compound A1 can also be replaced with one of the compound A2, the compound A3 and the compound A4 of the m-diamide insecticide (of general formula I) described in the specification to form new examples.

### Example 24. Formulation of wettable powder containing 50% of the compound A1

According to formula requirements, 50% of the compound A1, 3% of a wetting agent YUS-SXC, 4% of a dispersant SK-24R, 6% of a wetting agent YUS-LXC, 5% of white carbon black and diatomite supplemented to 100% were fully mixed in percentage by weight and then pulverized by an ultrafine pulverizer to obtain wettable powder containing 50% of the compound A1. Physical property index determination results at normal temperature are as follows: an active component content is 50.59%; a suspension rate is 97.1%; a wetting time is 18 s; a dynamic surface tension is 38.65 dyn/cm (pesticide liquid concentration: 133 ppm); a pesticide liquid holding amount is 29.8 mg/cm²; and a contact angle is 25.9°. Under heat storage (54±2°C/14 d), the active component content is 50.12%; the suspension rate is 95.9%; the wetting time is 25 s; the dynamic surface tension is 39.56 dyn/cm (pesticide liquid concentration: 133 ppm); the pesticide liquid holding amount is 28.9 mg/cm²; and the contact angle is 26.7°.

The compound A1 can also be replaced with one of the compound A2, the compound A3 and the compound A4 of the m-diamide insecticide (of general formula I) described in the specification to form new examples.

### Example 25. Formulation of wettable powder containing 50% of the compound A1

According to formula requirements, 50% of the compound A1, 3% of a wetting agent TENSIOFIX BCZ, 5% of a polycarboxylate dispersant GY-D04, 5% of a dispersant SP-2836, 5% of white carbon black and diatomite supplemented to 100% were fully mixed in percentage by weight and then pulverized by an ultrafine pulverizer to obtain wettable powder containing 50% of the compound A1. Physical property index determination results at normal temperature are as follows: an active component content is 50.62%; a suspension rate is 95.9%; a wetting time is 21 s; a dynamic surface tension is 39.75 dyn/cm (pesticide liquid concentration: 133 ppm); a pesticide liquid holding amount is 28.3 mg/cm²; and a contact angle is 27.8°. Under heat storage (54±2°C/14 d), the active component content is 50.01%; the suspension rate is 93.8%; the wetting time is 27 s; the dynamic surface tension is 40.32 dyn/cm (pesticide liquid concentration: 133 ppm); the pesticide liquid holding amount is 27.8 mg/cm²; and the contact angle is 28.5°.

The compound A1 can also be replaced with one of the compound A2, the compound A3 and the compound A4 of the m-diamide insecticide (of general formula I) described in the specification to form new examples.

### Example 26. Formulation of a water dispersible granule containing 50% of the compound A1

According to formula requirements, 50% of the compound A1, 2% of a wetting agent TENSIOFIX BCZ, 5% of a dispersant PICO-SF3, 3% of a dispersant YUS-WG5, 3% of a dispersant sodium alkylnaphthalene sulfonate polycondensate, 8% of soluble starch, 5% of sodium sulfate and bentonite supplemented to 100% were added together in percentage by weight, mixed and pulverized, then kneaded with water, and added into a granulator equipped with a sieve screen with a certain size for granulation. Then, drying and sieving (according to a sieve screen range) were performed to obtain a water dispersible granule containing 50% of the compound A1. Physical property index determination results at normal temperature are as follows: an active component content is 50.38%; a suspension rate is 98.2%; a disintegration time is 29 s; a dynamic surface tension is 39.91 dyn/cm (pesticide liquid concentration: 133 ppm); a pesticide liquid holding amount is 28.9 mg/cm²; and a contact angle is 26.9°. Under heat storage (54±2°C/14 d), the active component content is 50.12%; the suspension rate is 97.8%; the disintegration time is 32 s; the dynamic surface tension is 41.23 dyn/cm (pesticide liquid concentration: 133 ppm); the pesticide liquid holding amount is 28.3 mg/cm²; and the contact angle is 27.3°.

The compound A1 can also be replaced with one of the compound A2, the compound A3 and the compound A4 of the m-diamide insecticide (of general formula I) described in the specification to form new examples.

### Example 27. Formulation of a water dispersible granule containing 60% of the compound A1

According to formula requirements, 60% of the compound A1, 1% of a wetting agent Morwet EFW, 4% of a dispersant YUS-WG5, 5% of a dispersant SK-24, 4% of a dispersant sodium methylnaphthalene sulfonate-formaldehyde condensate, 6% of soluble starch, 4% of sodium sulfate and bentonite supplemented to 100% were added together in percentage by weight, mixed and pulverized, then kneaded with water, and added into a granulator equipped with a sieve screen with a certain size for granulation. Then, drying and sieving (according to a sieve screen range) were performed to obtain a water dispersible granule containing 60% of the compound A1. Physical property index determination results at normal temperature are as follows: an active component content is 60.37%; a suspension rate is 97.6%; a disintegration time is 30 s; a dynamic surface tension is 38.66 dyn/cm (pesticide liquid concentration: 133 ppm); a pesticide liquid holding amount is 29.6 mg/cm²; and a contact angle is 28.1°. Under heat storage (54±2°C/14 d), the active component content is 60.16%; the suspension rate is 97.1%; the disintegration time is 33 s; the dynamic surface tension is 39.53 dyn/cm (pesticide liquid concentration: 133 ppm); the pesticide liquid holding amount is 29.1 mg/cm²; and the contact angle is 28.6°.

The compound A1 can also be replaced with one of the compound A2, the compound A3 and the compound A4 of the m-diamide insecticide (of general formula **I)** described in the specification to form new examples.

### Example 28. Formulation of a water dispersible granule containing 60% of the compound A1

According to formula requirements, 60% of the compound A1, 1% of a wetting agent sodium dodecyl sulfate, 6% of a dispersant sodium methylnaphthalene sulfonate-formaldehyde condensate, 4% of a dispersant YUS-WG4, 6% of soluble starch, 8% of sodium sulfate and diatomite supplemented to 100% were added together in percentage by weight, mixed and pulverized, then kneaded with water, and added into a granulator equipped with a sieve screen with a certain size for granulation. Then, drying and sieving (according to a sieve screen range) were performed to obtain a water dispersible granule containing 60% of the compound A1. Physical property index determination results at normal temperature are as follows: an active component content is 60.52%; a suspension rate is 96.9%; a disintegration time is 33 s; a dynamic surface tension is 40.53 dyn/cm (pesticide liquid concentration: 133 ppm); a pesticide liquid holding amount is 30.3 mg/cm²; and a contact angle is 27.5°. Under heat storage (54±2°C/14 d), the active component content is 60.22%; the suspension rate is 96.2%; the disintegration time is 36 s; the dynamic surface tension is 42.15 dyn/cm (pesticide liquid concentration: 133 ppm); the pesticide liquid holding amount is 29.5 mg/cm²; and the contact angle is 28.1°.

The compound A1 can also be replaced with one of the compound A2, the compound A3 and the compound A4 of the m-diamide insecticide (of general formula I) described in the specification to form new examples.

### Example 29. Formulation of a water dispersible granule containing 70% of the compound A1

According to formula requirements, 70% of the compound A1, 2% of a wetting agent TENSIOFIX BCZ, 4% of a dispersant PICO-SF3, 4% of a dispersant sodium methylnaphthalene sulfonate-formaldehyde condensate, 6% of soluble starch, 6% of sodium sulfate and bentonite supplemented to 100% were added together in percentage by weight, mixed and pulverized, then kneaded with water, and added into a granulator equipped with a sieve screen with a certain size for granulation. Then, drying and sieving (according to a sieve screen range) were performed to obtain a water dispersible granule containing 70% of the compound A1. Physical property index determination results at normal temperature are as follows: an active component content is 70.38%; a suspension rate is 98.3%; a disintegration time is 26 s; a dynamic surface tension is 39.82 dyn/cm (pesticide liquid concentration: 133 ppm); a pesticide liquid holding amount is 27.5 mg/cm²; and a contact angle is 26.7°. Under heat storage (54±2°C/14 d), the active component content is 70.01%; the suspension rate is 97.3%; the disintegration time is 29 s; the dynamic surface tension is 41.51 dyn/cm (pesticide liquid concentration: 133 ppm); the pesticide liquid holding amount is 26.9 mg/cm²; and the contact angle is 27.1°.

The compound A1 can also be replaced with one of the compound A2, the compound A3 and the compound A4 of the m-diamide insecticide (of general formula I) described in the specification to form new examples.

### Example 30. Formulation of a water dispersible granule containing 50% of the compound A1

According to formula requirements, 50% of the compound A1, 4% of a polycarboxylate dispersant GY-D04, 4% of a dispersant YUS-FS7PG, 2% of a dispersant Supragil MNS/90, 2% of a wetting agent sodium dodecyl sulfate, 10% of soluble starch, 6% of sodium sulfate and bentonite supplemented to 100% were added together in percentage by weight, mixed and pulverized, then kneaded with water, and added into a granulator equipped with a sieve screen with a certain size for granulation. Then, drying and sieving (according to a sieve screen range) were performed to obtain a water dispersible granule containing 50% of the compound A1. Physical property index determination results at normal temperature are as follows: an active component content is 50.36%; a suspension rate is 96.9%; a disintegration time is 28 s; a dynamic surface tension is 41.12 dyn/cm (pesticide liquid concentration: 133 ppm); a pesticide liquid holding amount is 28.6 mg/cm²; and a contact angle is 28.5°. Under heat storage (54±2°C/14 d), the active component content is 49.98%; the suspension rate is 95.8%; the disintegration time is 31 s; the dynamic surface tension is 42.25 dyn/cm (pesticide liquid concentration: 133 ppm); the pesticide liquid holding amount is 27.9 mg/cm²; and the contact angle is 29.1°.

The compound A1 can also be replaced with one of the compound A2, the compound A3 and the compound A4 of the m-diamide insecticide (of general formula I) described in the specification to form new examples.

### Example 31. Formulation of a dry suspension containing 50% of the compound A1

According to formula requirements, 50% of the compound A1, 7.5% of a wetting agent sodium dodecyl sulfate, 6% of a dispersant octylphenol polyoxyethylene ether sulfate, 6% of sodium sulfate, 0.2% of a silicone oil-based SAG1522 defoamer, 30.3% of kaolin and 30% of water were sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, a suspended slurry was pumped into a spray dryer for drying and granulation, wherein a spray pressure was controlled at 2-3 Mpa, an air inlet temperature for the drying was 140°C, and an air outlet temperature was 80°C. After the granulation, a material was subjected to sieving to obtain a 60-80 mesh dry suspension containing 50% of the compound A1. Physical property index determination results at normal temperature are as follows: an active component content is 50.57%; a suspension rate is 98.5%; a dispersity is 98.6%; a disintegration time is 20 s; a dynamic surface tension is 42.23 dyn/cm (pesticide liquid concentration: 133 ppm); a pesticide liquid holding amount is 28.9 mg/cm²; a contact angle is 26.9°; and no dust is achieved. Under heat storage (54±2°C/14 d), the active component content is 50.03%; the suspension rate is 97.3%; the dispersity is 97.8%; the disintegration time is 23 s; the dynamic surface tension is 43.1 dyn/cm (pesticide liquid concentration: 133 ppm); the pesticide liquid holding amount is 27.5 mg/cm²; the contact angle is 27.5°; no dust is achieved; and no dead particles are achieved.

The compound A1 can also be replaced with one of the compound A2, the compound A3 and the compound A4 of the m-diamide insecticide (of general formula I) described in the specification to form new examples.

### Example 32. Formulation of a dry suspension containing 50% of the compound A1

According to formula requirements, 50% of the compound A1, 6% of a dispersant SP-DF2222, 2% of a dispersant SP-DF2296, 6% of a wetting agent sodium dodecyl sulfate, 5% of sodium sulfate, 0.2% of a silicone oil-based SAG1522 defoamer, 30.8% of bentonite and 30% of water were sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, a suspended slurry was pumped into a spray dryer for drying and granulation, wherein a spray pressure was controlled at 2-3 Mpa, an air inlet temperature for the drying was 140°C, and an air outlet temperature was 80°C. After the granulation, a material was subjected to sieving to obtain a 60-80 mesh dry suspension containing 50% of the compound A1. Physical property index determination results at normal temperature are as follows: an active component content is 50.56%; a suspension rate is 97.8%; a disintegration time is 18 s; a dispersity is 98.7%; a dynamic surface tension is 39.80 dyn/cm (pesticide liquid concentration: 133 ppm); a pesticide liquid holding amount is 29.1 mg/cm²; a contact angle is 26.6°; and no dust is achieved. Under heat storage (54±2°C/14 d), the active component content is 50.21%; the suspension rate is 96.1%; the disintegration time is 21 s; the dispersity is 98.1%; the dynamic surface tension is 40.32 dyn/cm (pesticide liquid concentration: 133 ppm); the pesticide liquid holding amount is 28.5 mg/cm²; the contact angle is 27.1°; no dust is achieved; and no dead particles are achieved.

The compound A1 can also be replaced with one of the compound A2, the compound A3 and the compound A4 of the m-diamide insecticide (of general formula I) described in the specification to form new examples.

### Example 33. Formulation of a dry suspension containing 60% of the compound A1

According to formula requirements, 60% of the compound A1, 6% of a dispersant SD-610, 5% of a dispersant SK-24R, 7% of a wetting agent sodium dodecyl sulfate, 5% of sodium sulfate, 0.2% of a silicone oil-based SAG1522 defoamer, 16.8% of diatomite and 35% of water were sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, a suspended slurry was pumped into a spray dryer for drying and granulation, wherein a spray pressure was controlled at 2-3 Mpa, an air inlet temperature for the drying was 140°C, and an air outlet temperature was 80°C. After the granulation, a material was subjected to sieving to obtain a 60-80 mesh dry suspension containing 60% of the compound A1. Physical property index determination results at normal temperature are as follows: an active component content is 60.52%; a suspension rate is 96.9%; a disintegration time is 15 s; a dispersity is 98.6%; a dynamic surface tension is 43.51 dyn/cm (pesticide liquid concentration: 133 ppm); a pesticide liquid holding amount is 29.7 mg/cm²; a contact angle is 28.1°; and no dust is achieved. Under heat storage (54±2°C/14 d), the active component content is 60.02%; the suspension rate is 95.2%; the disintegration time is 19 s; the dispersity is 97.9%; the dynamic surface tension is 44.25 dyn/cm (pesticide liquid concentration: 133 ppm); the pesticide liquid holding amount is 29.1 mg/cm²; the contact angle is 28.6°; no dust is achieved; and no dead particles are achieved.

The compound A1 can also be replaced with one of the compound A2, the compound A3 and the compound A4 of the m-diamide insecticide (of general formula I) described in the specification to form new examples.

### Example 34. Formulation of a dry suspension containing 60% of the compound A1

According to formula requirements, 60% of the compound A1, 5% of a dispersant Disperse 1700, 5% of a dispersant SP-2836, 5% of a dispersant SP-DF2222, 7% of a wetting agent sodium dodecyl sulfate, 3% of sodium sulfate, 0.2% of a silicone oil-based SAG1522 defoamer, 14.8% of kaolin and 30% of water were sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, a suspended slurry was pumped into a spray dryer for drying and granulation, wherein a spray pressure was controlled at 2-3 Mpa, an air inlet temperature for the drying was 140°C, and an air outlet temperature was 80°C. After the granulation, a material was subjected to sieving to obtain a 60-80 mesh dry suspension containing 60% of the compound A1. Physical property index determination results at normal temperature are as follows: an active component content is 60.58%; a suspension rate is 99%; a disintegration time is 25 s; a dispersity is 98.9%; a dynamic surface tension is 43.18 dyn/cm (pesticide liquid concentration: 133 ppm); a pesticide liquid holding amount is 28.1 mg/cm²; a contact angle is 28.8°; and no dust is achieved. Under heat storage (54±2°C/14 d), the active component content is 60.05%; the suspension rate is 97.9%; the disintegration time is 29 s; the dispersity is 98.5%; the dynamic surface tension is 43.93 dyn/cm (pesticide liquid concentration: 133 ppm); the pesticide liquid holding amount is 27.6 mg/cm²; the contact angle is 29.3°; no dust is achieved; and no dead particles are achieved.

The compound A1 can also be replaced with one of the compound A2, the compound A3 and the compound A4 of the m-diamide insecticide (of general formula I) described in the specification to form new examples.

### Example 35. Formulation of a dry suspension containing 75% of the compound A1

According to formula requirements, 75% of the compound A1, 8% of a dispersant sodium lignosulfonate, 5% of a dispersant sodium alkylnaphthalenesulfonate-formaldehyde condensate, 3% of sodium sulfate, 2% of a dispersant sodium α-olefin sulfonate, 0.2% of a silicone oil-based SAG1522 defoamer, 6.8% of bentonite and 80% of water were sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, a suspended slurry was pumped into a spray dryer for drying and granulation, wherein a spray pressure was controlled at 2-3 Mpa, an air inlet temperature for the drying was 140°C, and an air outlet temperature was 80°C. After the granulation, a material was subjected to sieving to obtain a 60-80 mesh dry suspension containing 75% of the compound A1. Physical property index determination results at normal temperature are as follows: an active component content is 75.39%; a suspension rate is 98.5%; a disintegration time is 20 s; a dispersity is 98.5%; a dynamic surface tension is 39.81 dyn/cm (pesticide liquid concentration: 133 ppm); a pesticide liquid holding amount is 27.8 mg/cm²; a contact angle is 29.3°; and no dust is achieved. Under heat storage (54±2°C/14 d), the active component content is 75.11%; the suspension rate is 97.2%; the disintegration time is 26 s; the dispersity is 97.6%; the dynamic surface tension is 40.62 dyn/cm (pesticide liquid concentration: 133 ppm); the pesticide liquid holding amount is 27.1 mg/cm²; the contact angle is 29.9°; no dust is achieved; and no dead particles are achieved.

The compound A1 can also be replaced with one of the compound A2, the compound A3 and the compound A4 of the m-diamide insecticide (of general formula **I)** described in the specification to form new examples.

### Comparative Example 1. Formulation of a suspension containing 10% of the compound A1

According to formula requirements, 10% of the compound A1, 3% of a dispersant sodium methylnaphthalene sulfonate-formaldehyde condensate, 4% of a dispersant sodium alkylnaphthalene sulfonate polycondensate, 4% of an emulsifier 0201B, 0.8% of magnesium aluminum silicate, 0.8% of white carbon black, 0.1% of xanthan gum, 0.2% of EQ, 5% of ethylene glycol, 0.5% of a defoamer SAG1522 and water supplemented to 100% were sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a suspension containing 10% of the compound A1. A suspension rate is 95%, and the dispersion stability is good. After heat storage (54±2°C/14 d), the dispersion stability is poor, the suspension rate is 80%, serious stratification and bottom caking are caused, and the particle size is greatly increased.

### Comparative Example 2. Formulation of a dispersible oil suspension containing 10% of the compound A1

According to formula requirements, 10% of the compound A1, 5% of an emulsifier 0201B, 2% of an emulsifier 500#, 5% of a dispersant YUS-CH1100, 2% of an emulsifier 1601, 1% of white carbon black and methyl oleate supplemented to 100% were sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, filtration was performed to obtain a dispersible oil suspension containing 10% of the compound A1. At normal temperature, a suspension rate is 93%, and the dispersion stability is good. After heat storage (54±2°C/14 d), much oil is precipitated, and the dispersion stability is poor; serious stratification and bottom caking are caused; and the suspension rate is 78%.

### Comparative Example 3. Formulation of a 10% dispersible liquid

According to formula requirements, 10% of the compound A1 and 25% of a solvent Rhodiasolv Green 25 were separately added in percentage by weight into a mixing kettle and stirred for dissolution or heated for dissolution in a hot water bath when necessary, and then 3% of a wetting agent DURAMAX^{™} W600, 4% of an emulsifier SK-5208T, 5% of an emulsifier YUS-EC2200 and methyl oleate supplemented to 100% were sequentially added and mixed evenly to obtain a dispersible liquid containing 10% of the compound A1. At normal temperature, the dispersity is great; a suspension rate is 97%; and a particle size (D50/97) is 0.75/2.06. After heat storage (54±2°C/14 d), the dispersity is good; the suspension rate is 86%; and the particle size (D50/97) is 1.58/7.89.

### Comparative Example 4. Formulation of wettable powder containing 50% of the compound A1

According to formula requirements, 50% of the compound A1, 3% of a wetting agent sodium dodecyl sulfate, 5% of a dispersant sodium alkylnaphthalene sulfonate polycondensate, 5% of a dispersant sodium methylene naphthalene sulfonate, 10% of white carbon black and diatomite supplemented to 100% were fully mixed in percentage by weight and then pulverized by an ultrafine pulverizer to obtain wettable powder containing 50% of the compound A1. At normal temperature, a wetting time is 39 s; and a suspension rate is 95%. After heat storage (54±2°C/14 d), the wetting time is 180 s; the suspension rate is 78%; and caking is caused.

### Comparative Example 5. Formulation of a water dispersible granule containing 50% of the compound A1

According to formula requirements, 50% of the compound A1, 2% of a wetting agent Morwet EFW, 5% of a dispersant SD816, 3% of a dispersant SK-20TX, 5% of soluble starch, 5% of sodium sulfate and bentonite supplemented to 100% were added together in percentage by weight, mixed and pulverized, then kneaded with water, and added into a granulator equipped with a sieve screen with a certain size for granulation. Then, drying and sieving (according to a sieve screen range) were performed to obtain a water dispersible granule containing 50% of the compound A1. Physical property index determination results of a sample at normal temperature are as follows: a suspension rate is 96.5%; and a disintegration time is 38 s. After heat storage (54±2°C/14 d) of the sample, the suspension rate is 82.9%; and dead particles are achieved within the disintegration time.

### Comparative Example 6. Formulation of a dry suspension containing 50% of the compound A1

According to formula requirements, 50% of the compound A1, 5% of a wetting agent sodium dodecyl sulfate, 6% of a dispersant YUS-WG5, 4% of a dispersant Morwet D450, 6% of sodium sulfate, 0.2% of a silicone oil-based SAG1522 defoamer, 28.8% of kaolin and 30% of water were sequentially added in percentage by weight into a mixing tank for mixing, first subjected to coarse pulverization and homogenization through high shear, and then sucked into a sand mill for fine grinding. The particle size of a sanded material was detected by using a particle size distribution tester. When the particle size reached standard requirements, a suspended slurry was pumped into a spray dryer for drying and granulation, wherein a spray pressure was controlled at 2-3 Mpa, an air inlet temperature for the drying was 140°C, and an air outlet temperature was 80°C. After the granulation, a material was subjected to sieving to obtain a 60-80 mesh dry suspension containing 50% of the compound A1. At normal temperature, a suspension rate is 97%; and a disintegration time is 36 s. After heat storage (54±2°C/14 d), a wetting time is 650 s; and the suspension rate is 76%.

### Performance test example

### Example 36. Stability comparison experiment

The stability of insecticidal preparations of the present invention was tested, and meanwhile, the compound A1 was formulated by a method mentioned in CN 112457288 B to serve as a control preparation to carry out a comparative test. Experimental results are shown in Table 1 and Table 2.

Formulation of control preparations: The compound A1 was dissolved with acetone or dimethyl sulfoxide (a content of the acetone or dimethyl sulfoxide in a total solution was not greater than 10%), and then formulated into solutions at desired concentrations with a 0.1% Tween 80 aqueous solution.

**Table 1. Stability comparison experiment results of liquid preparations (room temperature)**

| **Test pesticide agent** | **Placement time (month)** | **98%-passed average particle size (D₉₈)** | **Flowability** | **Dynamic surface tension (mN/m) (pesticide liquid concentration: 133 ppm)** |
|---|---|---|---|---|
| Example 1 Suspension containing 5% of the compound A1 | 1 | 2.03 | Great | 36.39 |
| | 6 | 2.05 | Great | 36.51 |
| | 12 | 2.07 | Great | 36.62 |
| Example 2 Suspension containing 10% of | 1 | 2.11 | Great | 35.58 |
| | 6 | 2.15 | Great | 35.59 |
| the compound A1 | 12 | 2.19 | Great | 35.61 |
| Example 3 Suspension containing 10% of the compound A1 | 1 | 2.39 | Great | 35.92 |
| | 6 | 2.43 | Great | 35.89 |
| | 12 | 2.46 | Great | 36.11 |
| Example 4 Suspension containing 10% of the compound A1 | 1 | 2.39 | Great | 36.18 |
| | 6 | 2.42 | Great | 36.32 |
| | 12 | 2.46 | Great | 36.39 |
| Example 5 Suspension containing 10% of the compound A1 | 1 | 2.43 | Great | 37.31 |
| | 6 | 2.45 | Great | 37.32 |
| | 12 | 2.49 | Great | 37.35 |
| Example 6 Suspension containing 10% of the compound A1 | 1 | 2.09 | Great | 35.79 |
| | 6 | 2.11 | Great | 35.86 |
| | 12 | 2.13 | Great | 36.01 |
| Example 7 Suspension containing 15% of the compound A1 | 1 | 2.17 | Great | 36.55 |
| | 6 | 2.21 | Great | 36.71 |
| | 12 | 2.23 | Great | 36.82 |
| Example 8 Suspension containing 15% of the compound A1 | 1 | 2.51 | Great | 36.62 |
| | 6 | 2.53 | Great | 36.65 |
| | 12 | 2.57 | Great | 36.66 |
| Example 9 Suspension containing 20% of the compound A1 | 1 | 2.65 | Great | 37.27 |
| | 6 | 2.69 | Great | 37.32 |
| | 12 | 2.73 | Great | 37.39 |
| Example 10 Suspension containing 30% of the compound A1 | 1 | 2.77 | Great | 38.25 |
| | 6 | 2.83 | Great | 38.39 |
| | 12 | 2.89 | Great | 38.46 |
| Example 11 Suspension containing 40% of the compound A1 | 1 | 2.92 | Great | 37.95 |
| | 6 | 2.98 | Great | 38.02 |
| | 12 | 3.01 | Great | 38.11 |
| Example 12 Suspension containing 50% of the compound A1 | 1 | 3.35 | Great | 39.86 |
| | 6 | 3.39 | Great | 39.92 |
| | 12 | 3.43 | Great | 40.02 |
| Example 13 Dispersible oil suspension containing 10% of the compound A1 | 1 | 2.72 | Great | 37.19 |
| | 6 | 2.79 | Great | 37.23 |
| | 12 | 2.83 | Great | 37.36 |
| Example 14 Dispersible oil suspension containing 10% of the compound A1 | 1 | 2.41 | Great | 36.92 |
| | 6 | 2.45 | Great | 36.99 |
| | 12 | 2.49 | Great | 37.11 |
| Example 15 Dispersible oil suspension containing 20% of the compound A1 | 1 | 3.19 | Great | 37.33 |
| | 6 | 3.23 | Great | 37.39 |
| | 12 | 3.26 | Great | 37.42 |
| Example 16 Dispersible oil suspension containing 20% of the compound A1 | 1 | 3.41 | Great | 36.71 |
| | 6 | 3.45 | Great | 36.78 |
| | 12 | 3.51 | Great | 36.82 |
| Example 17 Dispersible oil suspension containing 30% of the compound A1 | 1 | 2.83 | Great | 38.72 |
| | 6 | 2.86 | Great | 38.79 |
| | 12 | 2.91 | Great | 38.86 |
| Example 18 Dispersible oil suspension containing 40% of the compound A1 | 1 | 3.78 | Great | 39.26 |
| | 6 | 3.81 | Great | 39.33 |
| | 12 | 3.89 | Great | 39.39 |
| Example 19 Dispersible liquid containing 10% of the compound A1 | 1 | 1.93 | Great | 35.66 |
| | 6 | 1.98 | Great | 35.69 |
| | 12 | 2.02 | Great | 35.78 |
| Example 20 Dispersible liquid containing 20% of the compound A1 | 1 | 1.97 | Great | 37.19 |
| | 6 | 2.03 | Great | 37.26 |
| | 12 | 2.09 | Great | 37.33 |
| 10% control preparation | 0.1 | A raw pesticide solid is precipitated and is unable to use | | |
| 20% control preparation | 0.1 | A raw pesticide solid is precipitated and is unable to use | | |

As can be seen from Table 1, the control preparations cannot be used after being placed at room temperature for 0.1 month; and meanwhile, the preparations provided in the present invention (Example 1-Example 20) have small changes in dynamic surface tension, great sample stability, good dilution stability and small changes in sample particle size (D₉₈) after being placed for 1 month, 6 months and 12 months. It is indicated that the samples formulated in the examples of the present invention can not only meet wetting of a pesticide liquid on a target, but also have good sample storage stability over time. The data in the above table prove that the preparations formulated by selecting the auxiliary agent system of the present invention have good storage stability, which are convenient to apply and conducive to exerting pesticide efficacy.

**Table 2-1. Stability comparison experiment results of solid preparations (room temperature)**

| **Test pesticide agent** | **Placement time (month)** | **Wetting time (s)** | **Suspension rate (%)** | **Dynamic surface tension (mN/m) (pesticide liquid concentration: 133 ppm)** |
|---|---|---|---|---|
| Example 21 Wettable powder containing 10% of the compound A1 | 1 | 23 | 97.1 | 43.22 |
| | 6 | 23 | 96.6 | 43.29 |
| | 12 | 25 | 96.2 | 43.33 |
| Example 22 Wettable powder containing 20% of the compound A1 | 1 | 25 | 95.5 | 39.86 |
| | 6 | 26 | 95.2 | 39.91 |
| | 12 | 26 | 94.6 | 39.99 |
| Example 23 Wettable powder containing 40% of the compound A1 | 1 | 19 | 96.1 | 40.66 |
| | 6 | 19 | 95.8 | 40.69 |
| | 12 | 20 | 95.3 | 40.76 |
| Example 24 Wettable powder containing 50% of the compound A1 | 1 | 18 | 97.1 | 38.69 |
| | 6 | 19 | 96.6 | 38.72 |
| | 12 | 20 | 95.7 | 38.79 |
| Example 25 Wettable powder containing 50% of the compound A1 | 1 | 21 | 95.8 | 39.77 |
| | 6 | 22 | 95.1 | 39.79 |
| | 12 | 24 | 94.9 | 39.86 |
| 10% control preparation | 0.1 | A raw pesticide solid is precipitated and is unable to use | | |
| 20% control preparation | 0.1 | A raw pesticide solid is precipitated and is unable to use | | |

As can be seen from Table 2-1, the control preparations cannot be used after being placed at room temperature for 0.1 month; and meanwhile, the preparations provided in the present invention (Example 21-Example 25) have small changes in wetting time, dynamic surface tension and suspension rate after being placed for 1 month, 6 months and 12 months. It is indicated that the samples formulated in the examples of the present invention can not only meet wetting of a pesticide liquid on a target, but also have good sample storage stability over time. The data in the above table prove that the preparations formulated by selecting the auxiliary agent system of the present invention have good storage stability, which are convenient to apply and conducive to exerting pesticide efficacy.

**Table 2-2. Stability comparison experiment results of solid preparations (room temperature)**

| **Test pesticide agent** | **Placement time (month)** | **Disintegration time (s)** | **Suspension rate (%)** | **Dynamic surface tension (mN/m) (pesticide liquid concentration: 133**ppm) |
|---|---|---|---|---|
| Example 26 Water dispersible granule containing 50% of the compound A1 | 1 | 29 | 98.1 | 39.93 |
| | 6 | 30 | 97.8 | 40.01 |
| | 12 | 30 | 97.2 | 40.12 |
| Example 27 Water dispersible granule containing 60% of the compound A1 | 1 | 30 | 97.7 | 38.69 |
| | 6 | 31 | 97.3 | 38.72 |
| | 12 | 32 | 96.8 | 38.79 |
| Example 28 Water dispersible granule containing 60% of the compound A1 | 1 | 33 | 97.0 | 40.55 |
| | 6 | 34 | 96.5 | 40.61 |
| | 12 | 36 | 96.2 | 40.66 |
| Example 29 Water dispersible granule containing 70% of the compound A1 | 1 | 27 | 98.2 | 39.88 |
| | 6 | 28 | 97.8 | 39.95 |
| | 12 | 38 | 97.1 | 40.02 |
| Example 30 Water dispersible granule containing 50% of the compound A1 | 1 | 28 | 96.8 | 41.19 |
| | 6 | 28 | 96.3 | 41.31 |
| | 12 | 29 | 95.7 | 41.39 |
| Example 31 Dry suspension containing 50% of the compound A1 | 1 | 20 | 98.3 | 42.25 |
| | 6 | 21 | 97.6 | 42.33 |
| | 12 | 21 | 97.1 | 42.39 |
| Example 32 Dry suspension containing 50% of the compound A1 | 1 | 18 | 97.7 | 39.82 |
| | 6 | 19 | 97.2 | 39.96 |
| | 12 | 20 | 96.8 | 40.05 |
| Example 33 Dry suspension containing 60% of the compound A1 | 1 | 15 | 96.5 | 43.55 |
| | 6 | 16 | 96.1 | 43.71 |
| | 12 | 18 | 95.3 | 43.79 |
| Example 34 Dry suspension containing 60% of the compound A1 | 1 | 25 | 98.8 | 43.19 |
| | 6 | 26 | 98.5 | 43.28 |
| | 12 | 28 | 97.6 | 43.35 |
| Example 35 Dry suspension containing 75% of the compound A1 | 1 | 20 | 98.2 | 39.83 |
| | 6 | 21 | 97.8 | 39.91 |
| | 12 | 23 | 97.3 | 40.06 |
| 10% control preparation | 0.1 | A raw pesticide solid is precipitated and is unable to use | | |
| 20% control preparation | 0.1 | A raw pesticide solid is precipitated and is unable to use | | |

As can be seen from Table 2-2, the control preparations cannot be used after being placed at room temperature for 0.1 month; and meanwhile, the preparations provided in the present invention (Example 26-Example 35) have small changes in disintegration time, suspension rate and dynamic surface tension after being placed for 1 month, 6 months and 12 months. It is indicated that the samples formulated in the examples of the present invention can not only meet wetting of a pesticide liquid on a target, but also have good sample storage stability over time. The data in the above table prove that the preparations formulated by selecting the auxiliary agent system of the present invention have good storage stability, which are convenient to apply and conducive to exerting pesticide efficacy.

### Biological activity test example

### Biological activity determination test

*Plutella xylostella, Ostrinia furnacnlis* Guenee, *Spodoptera frugiperda* and *Mythimna seperata,* which were sensitive populations raised indoors throughout the year, were test targets. Test conditions are as follows: a temperature was 24-26°C, a humidity was RH 60%, and illumination was L:D=14:10. Test preparations were accurately weighed with an electronic analytical balance and diluted with water to obtain pesticide liquids at desired concentrations, respectively. An airbrush spray method was used for treatment in the test. Cabbage leaves cultivated in a greenhouse were picked, prepared into leaf dishes with a diameter of 2 cm, and subjected to airbrush spray treatment at a pressure of 10 psi (about 0.7 kg/cm²), wherein spraying was performed on front and back faces of each leaf dish at a liquid spray amount of 0.5 mL. After being dried in the shade, the leaf dishes were placed into a 9 cm culture dish with filter paper, and neat and consistent test insects were selected and inoculated into the culture dish, wherein each treatment was repeated for 4 times. The treated test insects were placed in an observation room, reaction situations of the test insects were observed regularly, numbers of dead insects and live insects were investigated, and the mortality was calculated. Test results of some examples are shown in Table 3-Table 6.

**Table 3. Indoor activity determination results of Ostrinia furnacnlis Guenee using different formulation samples**

| **Test pesticide agent** | **Toxicity regression equation (Y=a+bX)** | **LC₅₀ (mg/L)** | **95% confidence limit (mg/L)** |
|---|---|---|---|
| Example 2 suspension containing 10% of the compound A1 | Y=5.3806+2.6801X | 0.7211 | 0.4997~0.9282 |
| Example 3 suspension containing 10% of the compound A1 | Y=5.2755+2.0904X | 0.7383 | 0.4809~1.0011 |
| Example 8 suspension containing 15% of the compound A1 | Y=5.2133+1.9852X | 0.7808 | 0.5243~1.0436 |
| Example 15 dispersible oil suspension containing 20% of the compound A1 | Y=5.3025+2.8204X | 0.7812 | 0.5681~0.9829 |
| Example 16 dispersible oil suspension containing 20% of the compound A1 | Y=5.3599+2.0397X | 0.6661 | 0.4243~0.9010 |
| Example 19 dispersible liquid containing 10% of the compound A1 | Y=5.2032+1.5587X | 0.7407 | 0.4310~1.0635 |
| Raw pesticide containing 99% of the compound A1 | Y=4.7060+2.5933X | 1.2982 | 1.0202~1.6628 |

| | | | |
|---|---|---|---|
| Note: The raw pesticide containing 99% of the compound A1 is obtained by dissolving the compound with acetone and then formulating a solution at a desired concentration with a 0.1% Tween 80 aqueous solution. | | | |

The indoor activity determination results in Table 3 indicate that the LC₅₀ values of the samples formulated in the examples of the present invention are all lower than the LC₅₀ value of the raw pesticide containing 99% of the compound A1. As can be seen from the data, a prevention and control effect on the *Ostrinia furnacnlis* Guenee is good. By adopting the preparation samples formulated in the present invention, the active component has good dispersity, a high suspension rate and good adhesion to a target to increase the retention amount of a pesticide liquid on a plant surface, improve spreading and penetrating abilities and ensure the penetration and absorption of the pesticide liquid, thereby improve the utilization rate of the active component. Thus, the biological activity is higher than that of the raw pesticide.

**Table 4. Indoor activity determination results of Mythimna seperata using different formulation samples**

| **Test pesticide agent** | **Toxicity regression equation (Y=a+bX)** | **LC₅₀ (mg/L)** | **95% confidence limit (mg/L)** |
|---|---|---|---|
| Example 2 suspension containing 10% of the compound A1 | Y=17.7214+7.2571X | 0.0177 | 0.0059~0.0268 |
| Example 3 suspension containing 10% of the compound A1 | Y=17.1316+6.9528X | 0.018 | 0.0052~0.0277 |
| Example 8 suspension containing 15% of the compound A1 | Y=12.3857+4.2281X | 0.0179 | 0.0059~0.0276 |
| Example 15 dispersible oil suspension containing 20% of the compound A1 | Y=10.3194+3.1178X | 0.0197 | 0.0092~0.0286 |
| Example 16 dispersible oil suspension containing 20% of the compound A1 | Y=14.5710+6.0525X | 0.0262 | 0.0162~0.0338 |
| Example 19 dispersible liquid containing 10% of the compound A1 | Y=11.9969+4.5652X | 0.0293 | 0.0194~0.0371 |
| Raw pesticide containing 99% of the compound A1 | Y=14.3018+6.1193X | 0.0302 | 0.0204~0.0375 |

The indoor activity determination results in Table 4 indicate that the LC₅₀ values of the samples formulated in the examples of the present invention are all lower than the LC₅₀ value of the raw pesticide containing 99% of the compound A1. As can be seen from the data, a prevention and control effect on the *Mythimna seperata* is good. By adopting the preparation samples formulated in the present invention, the active component has good dispersity, a high suspension rate and good adhesion to a target to increase the retention amount of a pesticide liquid on a plant surface, improve spreading and penetrating abilities and ensure the penetration and absorption of the pesticide liquid, thereby improve the utilization rate of the active component. Thus, the biological activity is higher than that of the raw pesticide.

**Table 5. Indoor activity determination results of Plutella xylostella using different formulation samples**

| **Test pesticide agent** | **Toxicity regression equation (Y=a+bX)** | **LC₅₀ (mg/L)** | **95% confidence limit (mg/L)** |
|---|---|---|---|
| Example 2 suspension containing 10% of the compound A1 | Y=8.0542+2.7597X | 0.0782 | 0.0417~0.1078 |
| Example 3 suspension containing 10% of the compound A1 | Y=7.5214+2.3618X | 0.0856 | 0.0457~0.1190 |
| Example 8 suspension containing 15% of the compound A1 | Y=8.5519+3.3477X | 0.0869 | 0.0505~0.1151 |
| Example 15 dispersible oil suspension containing 20% of the compound A1 | Y=7.6003+2.4549X | 0.0873 | 0.0490~0.1191 |
| Example 16 dispersible oil suspension containing 20% of the compound A1 | Y=8.1147+3.0396X | 0.0945 | 0.0592~0.1235 |
| Example 19 dispersible liquid containing 10% of the compound A1 | Y=8.5186+3.6386X | 0.1079 | 0.0751~0.1345 |
| Raw pesticide containing 99% of the compound A1 | Y=7.1368+2.8270X | 0.1754 | 0.1363~0.2253 |

The indoor activity determination results in Table 5 indicate that the LC₅₀ values of the samples formulated in the examples of the present invention are all lower than the LC₅₀ value of the raw pesticide containing 99% of the compound A1. As can be seen from the data, a prevention and control effect on the *Plutella xylostella* is good. By adopting the preparation samples formulated in the present invention, the active component has good dispersity, a high suspension rate and good adhesion to a target to increase the retention amount of a pesticide liquid on a plant surface, improve spreading and penetrating abilities and ensure the penetration and absorption of the pesticide liquid, thereby improve the utilization rate of the active component. Thus, the biological activity is higher than that of the raw pesticide.

**Table 6. Indoor activity determination results of Spodoptera frugiperda using different formulation samples**

| **Test pesticide agent** | **Toxicity regression equation (Y=a+bX)** | **LC₅₀ (mg/L)** | **95% confidence limit (mg/L)** |
|---|---|---|---|
| Example 2 suspension containing 10% of the compound A1 | Y=8.2120+3.0262X | 0.0868 | 0.0684~0.1097 |
| Example 3 suspension containing 10% of the compound A1 | Y=8.9367+3.7417X | 0.0887 | 0.0732~0.1075 |
| Example 8 suspension containing 15% of the compound A1 | Y=8.4016+3.2650X | 0.0908 | 0.0743~0.1116 |
| Example 15 dispersible oil suspension containing 20% of the compound A1 | Y=8.3170+3.1885X | 0.0911 | 0.0719~0.1164 |
| Example 16 dispersible oil suspension containing 20% of the compound A1 | Y=8.5824+3.4370X | 0.0907 | 0.0743~0.1113 |
| Example 19 dispersible liquid containing 10% of the compound A1 | Y=8.0340+2.9128X | 0.0909 | 0.0730~0.1137 |
| Raw pesticide containing 99% of the compound A1 | Y=8.0927+3.3383X | 0.1185 | 0.0964~0.1550 |

The indoor activity determination results in Table 6 indicate that the LC₅₀ values of the samples formulated in the examples of the present invention are all lower than the LC₅₀ value of the raw pesticide containing 99% of the compound A1. As can be seen from the data, a prevention and control effect on the *Spodoptera frugiperda* is good. By adopting the preparation samples formulated in the present invention, the active component has good dispersity, a high suspension rate and good adhesion to a target to increase the retention amount of a pesticide liquid on a plant surface, improve spreading and penetrating abilities and ensure the penetration and absorption of the pesticide liquid, thereby improve the utilization rate of the active component. Thus, the biological activity is higher than that of the raw pesticide.

The preparation varieties researched and developed in the present invention have suitable dynamic surface tension, good spreading, wetting and adhesion of a pesticide liquid on a target, and a long retention time, thereby promoting rapid transmission of the active component and improving the biological activity of the active component. However, by adopting the preparations formulated in the present invention, not only is the biological activity improved to decrease the pesticide use amount, reduce the cost and kill a target to a maximum extent at the minimum pesticide use amount, but also the compatibility with the environment is improved. The preparations obtained in the present invention can all be used as insecticides for preventing and controlling agricultural, forestry or sanitary pests, and are safe to crops.

Contents that are not described in detail in the specification belong to existing technologies known to those of professional skills in the art.

## Claims

1. An insecticidal preparation containing an m-diamide compound, comprising an active ingredient, at least one carrier and at least one auxiliary agent, wherein the preparation is a suspension, a dispersible oil suspension, a dispersible liquid, wettable powder, a water dispersible granule, or a dry suspension; the active ingredient in the preparation is a compound of general formula I and has a weight percentage content of 1-99% in the preparation; 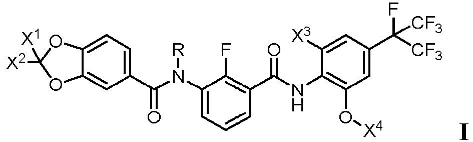 wherein:
X¹ and X³ are selected from halogen;
X² is selected from H or halogen;
X⁴ is selected from halogenated C₁-C₃ alkyl; and
R is selected from H, C₁-C₆ alkyl, or halogenated C₁-C₆ alkyl.

2. The insecticidal preparation containing an m-diamide compound according to claim 1, wherein
the suspension comprises, in percentage by weight, 5-75% of an active ingredient , 5-15% of a wetting dispersant, 4-10% of an antifreezing agent, 0-10% of other additives, and the balance of a liquid carrier, wherein the other additives are one or more of a defoamer, a preservative, a stabilizer, a penetrating agent, and a thickener;
the dispersible oil suspension comprises, in percentage by weight, 2-60% of the active ingredient, 5-30% of a surfactant, and the balance of an oil-based carrier;
the dispersible liquid comprises, in percentage by weight, 1-30% of the active ingredient, 4-20% of a surfactant, 2-30% of an organic solvent, and the balance of an oil-based carrier;
the wettable powder comprises, in percentage by weight, 10-85% of the active ingredient, 3-20% of a dispersant, and the balance of a solid inert carrier;
the water dispersible granule comprises, in percentage by weight, 0.5-75% of the active ingredient, 5-30% of a surfactant, and the balance of an inert carrier; and
the dry suspension comprises, in percentage by weight, 3-85% of the active ingredient, 5-20% of a surfactant, and the balance of an inert carrier.

3. The insecticidal preparation containing an m-diamide compound according to claim 2, wherein the wetting dispersant in the suspension is a dispersant SK-20TX, a dispersant SD811, a dispersant SK-25CH, a dispersant SK-24R, a dispersant SK-33SC, a dispersant SP-SC3, a dispersant SP-SC29, a dispersant SP-27001, a dispersant SP-2750, a dispersant SP-28F, a dispersant SP-2728, a wetting agent SP-3266E, a wetting agent Tensiofix D33, a dispersant Tensiofix AMS303, a dispersant Atlox 4913, a dispersant TENSIOFIX SC, TENSIOFIX 96DB10, a dispersant TENSIOFIX DB08, a dispersant DURAMAX^{™} D-305, a dispersant DURAMAX^{™} D-205, a dispersant D425, a dispersant YUS-FS3000, a dispersant DA1349, a wetting agent Rhodasurf 860/P, a wetting dispersant SF133, a dispersant FS981, a dispersant NS-500LQ, a dispersant Emulson TRN14105, a dispersant ULTRASURF 7023A, a synergist TWEEN L-1010, a dispersant sodium methylnaphthalene sulfonate-formaldehyde condensate, a dispersant sodium alkylnaphthalene sulfonate polycondensate, an emulsifier 0201B, a polycarboxylate dispersant GY-D800, a polycarboxylate dispersant GY-D04, a polycarboxylate dispersant GY-D02, a wetting agent DURAMAX^{™} W600, a dispersant DURAMAX^{™} D800, a dispersant DURAMAX^{™} D865, a dispersant YUS-FS7PG, a dispersant YUS-FS1, a dispersant YUS-TXC, a wetting agent YUS-A51G, a dispersant SP-SC3060, a dispersant YUS-5050PB, a dispersant TANEMUL DA2883, a dispersant TANEMUL DA2880, a dispersant Greensperse BE02, or a dispersant SK-92FS1;
the antifreezing agent is ethylene glycol, 1,2-propanediol, or glycerol;
the liquid carrier is water; and
the other additives comprise, in percentage by weight, 0-2% of the defoamer, 0-1% of the preservative, 0-2% of the stabilizer, 0-5% of the penetrating agent, and 0-3% of the thickener.

4. The insecticidal preparation containing an m-diamide compound according to claim 3, wherein the defoamer is SAG1522, SAG1572, AG-2501, AG2905, AGT735, or AGT530;
the preservative is Casson, EQ, DA20, GSL, or sodium benzoate;
the stabilizer is white carbon black, bentonite, or TENSIOFIX 869;
the penetrating agent is anhydrous fast T-80B or anhydrous fast T-80J; and
the thickener is magnesium aluminum silicate, xanthan gum, PVP K30, polyethylene glycol, or polyvinylpyrrolidone.

5. The insecticidal preparation containing an m-diamide compound according to claim 2, wherein the surfactant in the dispersible oil suspension is a wetting agent DURAMAX^{™} W600, a dispersant Greenmul EF46, a dispersant Greenmul EF68, an emulsifier 500, an emulsifier 0201B, an emulsifier 1601, an emulsifier S80, a dispersant DURAMAX^{™} D800, a dispersant TENSIOFIX 96DB10, a dispersant TENSIOFIX B9718, a thickener TENSIOFIX 869, an emulsifier YUS-135B, an emulsifier AEO-3, a dispersant DURAMAX^{™} D865, a dispersant DURAMAX^{™} D-305, an emulsifier SK-5935, a dispersant SK-94S7, a dispersant ULTRASURF OD21, a dispersant ULTRASURF OD23, a dispersant YUS-OD1200, a dispersant SP-OF3472, a dispersant SP-OF3468, white carbon black, a dispersant YUS-CH1100, a dispersant YUS-D935, a dispersant Atlox 4912, a dispersant Atlox 4914, or a dispersant GR7M; and the oil-based carrier is methylated soybean oil, methyl oleate, tributyl phosphate, methyl palmitioleate, or methyl cocoate.

6. The insecticidal preparation containing an m-diamide compound according to claim 2, wherein
the surfactant in the dispersible liquid is an emulsifier YUS-135B, an emulsifier YUS-A51G, a dispersant SK-92FS1, an emulsifier SK-5935, an emulsifier 500, an emulsifier 0201B, an emulsifier 1601, a dispersant DURAMAX^{™} D800, an emulsifier SK-50EC, an emulsifier SK-51EC, an emulsifier SK-5208T, an emulsifier SK-5215T, an emulsifier YUS-D625, an emulsifier YUS-135B, an emulsifier YUS-EC2200, a wetting agent DURAMAX^{™} W600, or a dispersant YUS-D3020; the organic solvent is Rhodiasolv Green 25, Armid FMPC, Armid DM10, Rhodiasolv Green SV-92, Rhodiasolv Green SV-33, solvent oil S-150, or solvent oil S-200; and the oil-based carrier is methyl oleate, methyl cocoate, methyl palmitioleate, or tributyl phosphate.

7. The insecticidal preparation containing an m-diamide compound according to claim 2, wherein the dispersant in the wettable powder is a dispersant Supragil MNS/90, sodium dodecyl sulfate, a dispersant SD819, a dispersant SK-20TX, a dispersant SK-24R, a polycarboxylate dispersant GY-D02, a polycarboxylate dispersant GY-D04, a wetting agent YUS-SXC, a wetting agent YUS-LXC, a dispersant TANEMUL DA2880, a dispersant TANEMUL DA2883, a wetting agent TENSIOFIX BCZ, a dispersant YUS-FS7PG, a dispersant SP-2836, a dispersant sodium alkylnaphthalene sulfonate polycondensate, a dispersant sodium methylene naphthalene sulfonate, a dispersant YUS-WP1, a dispersant YUS-WP2, or a dispersant YUS-FS1; and the solid inert carrier is white carbon black, bentonite, diatomite, attapulgite, light calcium carbonate, or clay.

8. The insecticidal preparation containing an m-diamide compound according to claim 2, wherein the surfactant in the water dispersible granule is a wetting agent TENSIOFIX BCZ, a wetting agent sodium dodecyl sulfate, a dispersant PICO-SF3, a dispersant YUS-WG4, a dispersant YUS-WG5, a dispersant sodium alkylnaphthalene sulfonate polycondensate, a dispersant sodium methylnaphthalene sulfonate-formaldehyde condensate, soluble starch, sodium sulfate, a wetting agent Morwet EFW, a dispersant SK-24, a dispersant SK-20TX, a polycarboxylate dispersant GY-D04, a dispersant YUS-FS7PG, a dispersant Supragil MNS/90, a dispersant SD816, a dispersant YUS-SXC, a dispersant YUS-LXC, a dispersant SP2836, or a dispersant TANEMUL DA2880; and the inert carrier is bentonite, diatomite, white carbon black, light calcium carbonate, kaolin, or attapulgite.

9. The insecticidal preparation containing an m-diamide compound according to claim 2, wherein the surfactant in the dry suspension is a wetting agent sodium dodecyl sulfate, a dispersant octylphenol polyoxyethylene ether sulfate, ammonium sulfate, SAG1522, a dispersant SP-DF2222, a dispersant SP-DF2296, a dispersant SD-610, a dispersant SK-24R, a dispersant Disperse 1700, a dispersant SP-2836, a dispersant sodium lignosulfonate, a dispersant sodium alkylnaphthalenesulfonate-formaldehyde condensate, a dispersant sodium α-olefin sulfonate, a dispersant YUS-WG5, a dispersant Morwet D450, a wetting agent Rhodasurf 860/p, a dispersant DURAMAX^{™} D-205, a dispersant DURAMAX^{™} D-305, a dispersant YUS-TXC, or an emulsifier YUS-A51G; and the inert carrier is kaolin, bentonite, diatomite, or attapulgite.
